# EUROPÄISCHE PATENTSCHRIFT

(11) **EP 3 009 051 B1**
(45) Veröffentlichungstag und Bekanntmachung des Hinweises auf die Patenterteilung: **07.11.2018**
(21) Anmeldenummer: 15002289.5
(22) Anmeldetag: 01.08.2015
(51) Int. Cl.: A47C 20/04

(54) **ELEKTROMOTORISCH VERSTELLBARE STÜTZEINRICHTUNG**
SUPPORT DEVICE ADJUSTABLE WITH AN ELECTRIC MOTOR
DISPOSITIF D'APPUI RÉGLABLE À MOTEUR ÉLECTRIQUE

(30) Priorität: 16.10.2014 DE 102014115075; 05.05.2015 DE 102015106991
(43) Veröffentlichungstag der Anmeldung: 20.04.2016
(73) Patentinhaber: De Werth Group AG, 8002 Zürich (CH)
(72) Erfinder: Dewert, Eckhart, 8638 Goldingen (CH)
(74) Vertreter: Wagner, Carsten

(56) Entgegenhaltungen:
- WO-A1-90/11748
- CH-A5- 688 733
- DE-A1- 4 236 195
- DE-A1- 4 336 241
- DE-U1- 20 104 961
- DE-U1-202014 000 212
- ES-A1- 2 156 571

## Beschreibung

Die Erfindung betrifft eine elektromotorisch verstellbare Stützeinrichtung der im Oberbegriff des Anspruchs 1 genannten Art für eine Polsterung eines Sitz- und/oder Liegemöbels, insbesondere eine Matratze eines Betts.

Zur Verstellung beispielsweise von Lattenrosten sind sogenannte Doppelantriebe bekannt, die ein als separates, mit dem Lattenrost verbindbares Bauteil ausgebildetes Gehäuse aufweisen, in dem zwei Verstelleinheiten aufgenommen sind, von denen die eine beispielsweise zur Verstellung eines Rückenstützteiles und die andere zur Verstellung eines Beinstützteiles des Lattenrostes dient. Die Verstelleinheiten sind bei den bekannten Doppelantrieben als Spindelantrieb ausgebildet, wobei die antriebstechnische Ankopplung an ein zu verstellendes Stützteil über einen Anlenkhebel erfolgt, der drehfest mit einer Schwenkwelle verbunden ist, die dem zu verstellenden Stützteil zugeordnet ist. Zum Verstellen des Stützteiles drückt die Spindelmutter des Spindeltriebes gegen den Anlenkhebel, so dass die Schwenkwelle und damit das Stützteil verschwenkt. Derartige Doppelantriebe sind beispielsweise durch EP 0372032 A1 und DE 3842078 A1 bekannt.

Durch DE 10017989 C2 und DE 10017979 C2 ist jeweils ein als Doppelantrieb ausgebildeter Möbelantrieb bekannt, bei dem jede Verstelleinheit eine elektromotorisch angetriebene Aufwickelvorrichtung für ein seil-, band- oder kettenförmiges Zugmittel aufweist, das nach Art eines Flaschenzuges mit einem Schwenkhebel verbunden ist, der drehfest mit einer Schwenkwelle verbunden ist, die ihrerseits mit einem zu verstellenden Stützteil in Wirkungsverbindung steht.

Nach einem ähnlichen Wirkungsprinzip arbeitende Möbelantriebe sind auch durch DE 3409223 C2, DE 19843259 C1 und EP 1020171 A1 bekannt.

Nach unterschiedlichen Wirkungsprinzipien arbeitende Doppelantriebe sind ferner durch DE 197292812 A1, DE 29811566 U1 und DE 29714746 U1 bekannt.

Durch DE 3900384 ist ein verstellbarer Lattenrost bekannt, bei dem die Verstellung eines Kopf- oder Beinstützteiles des Lattenrostes mittels eines Pneumatikzylinders erfolgt.

Durch DE 29602947 U1 ist ein Gasfederverstellbeschlag für Lattenroste bekannt, wobei zum Betätigen der Gasfeder ein Seilzug vorgesehen ist.

Durch DE 3103922 A1 ist ein Lattenrost bekannt, bei dem die Verstellung beispielsweise eines Oberkörperstützteiles über einen Scheibenwischermotor und eine Hubschere erfolgt.

Durch EP 1294255 B1 ist ein Doppelantrieb bekannt, bei dem die Kraftübertragung von einem linear beweglichen Antriebselement auf einen Schwenkhebel, der mit einer mit einem zu verstellenden Stützteil in Wirkungsverbindung stehende Schwenkwelle in Wirkungsverbindung steht, über einen Flaschenzug erfolgt. Ähnliche Möbelantriebe sind auch durch FR 2727296, DE 3409223 C2, DE 19843259 C1, GB 2334435 und US 5528948 bekannt.

Darüber hinaus sind Lattenroste bekannt, bei denen die Verstelleinrichtung zur Verstellung eines Stützteiles teilweise oder vollständig in einen Grundkörper des Lattenrostes integriert ist. In diesem Sinne zeigt und beschreibt DE 19962541 C2 (entsprechend EP 1239755 B1, JP 2001-546280 und US 6754922) eine motorisch verstellbare Stützeinrichtung, die ein zueinander parallele Längsholme aufweisendes erstes Stützteil aufweist, das bei der aus der Druckschrift bekannten Stützeinrichtung durch ein ortsfestes mittleres Stützteil gebildet ist. Die bekannte Stützeinrichtung weist ferner weitere Stützteile auf, die durch Antriebsmittel relativ zu dem ersten Stützteil verstellbar sind. Bei der aus der Druckschrift bekannten Stützeinrichtung ist ein erster Längsholm des ersten Stützteiles zur Aufnahme der Antriebsmittel als Hohlprofil ausgebildet, wobei der gesamte Antrieb einschließlich eines Antriebsmotors in dem hohlen Längsholm aufgenommen ist. Aufgrunddessen steht der Antriebsmotor in Vertikalrichtung des ersten Längsholmes nicht über denselben hervor, so dass die aus der Druckschrift bekannte Stützeinrichtung eine äußerst geringe Bauhöhe aufweist. Eine ähnliche Stützeinrichtungist auch durch DE 10046751 (entsprechend EP 1239754 B1, JP 2001-547994 und US 6961971) bekannt.

Durch WO 96/29970 ist eine motorisch verstellbare Stützeinrichtung für eine Matratze eines Bettes bekannt, die mehrere in Längsrichtung der Stützeinrichtung aufeinanderfolgende Stützteile aufweist, die durch Antriebsmittel relativ zu einem ersten Stützteil verschwenkbar sind. Die Stützteile sind an einem äußeren Rahmen gelagert, dessen Profilhöhe wesentlich größer ist als die Profilhöhe der Stützteile. Bei der aus der Druckschrift bekannten Stützeinrichtung sind Teile des äußeren Rahmens als Hohlprofil ausgebildet, wobei in dem Hohlprofil Teile des Antriebsmittels zur Vestellung der Stützteile relativ zueinander aufgenommen sind. Der Antriebsmotor ist an einer Innenseite eines Teiles des äußeren Rahmens angeordnet.

Durch DE 69507158 T2 (entsprechend EP 0788325 B1) ist eine motorisch verstellbare Stützeinrichtung für eine Matratze eines Bettes bekannt, die ein einen Längsholm aufweisendes erstes Stützteil und wenigstens ein zweites Stützteil aufweist, das durch Antriebsmittel relativ zu dem ersten Stützteil verschwenkbar ist. Bei der bekannten Stützeinrichtung ist der Antriebsmotor außerhalb der Grundfläche der Stützeinrichtung angeordnet und an einer rahmenartigen Verlängerung des ersten Stützteiles befestigt.

Durch EP 1633219 B1 ist ein Lattenrost bekannt, bei der in einem hohlen Längsholm Teile der Verstelleinrichtung aufgenommen sind, während der Antriebsmotor außerhalb des Längsholmes angeordnet ist und durch eine Ausnehmung hindurch mit den in dem Längsholm aufgenommenen Teilen der Verstelleinrichtung in Antriebsverbindung steht.

Durch WO 2008/113401 ist ein zum Verstellen einer Schublade relativ zu einem Korpus eines Schrankes vorgesehener Möbelantrieb bekannt, bei dem die Verstellung der Schublade über eine biegsame Zahnstange erfolgt, die in Eingriff mit einem Zahnrad steht.

Durch DE 10 2008 028586 A1 ist ein Lattenrost mit integrierter Verstelleinrichtung bekannt, bei dem die Kraftübertragung von Antriebsmotoren der Verstelleinrichtung auf die zu verstellenden Stützteile über Zugseile erfolgt, die über Umlenkungen geführt sind.

Die bekannten Stützeinrichtungen mit relativ zueinander schwenkverstellbaren Stützteilen weisen grundsätzlich einen hohen Komfort für den Benutzer auf. Nachteilig ist jedoch, dass bei einer Schwenkverstellung beispielsweise eines Oberkörperstützteiles relativ zu einem ortsfesten mittleren Stützteil die Matratze gestaucht wird, wobei die Stauchung umso stärker wird, je stärker das Oberkörperstützteil relativ zu dem mittleren Stützteil verstellt ist. Die Stauchung der Matratze führt dazu, dass sich das auf dem Oberkörperstützteil aufliegende freie Ende der Matratze mit zunehmender Verstellung relativ zu dem freien Ende des Oberkörperstützteiles verschiebt.

Zur Vermeidung dieses Nachteiles ist es aus der DE 20 2015 100 471 U1 bekannt, das Oberkörperstützteil simultan mit der Schwenkverstellung translatorisch zu bewegen. Aus der Druckschrift ist eine elektromotorisch verstellbare Stützeinrichtung der betreffenden Art für eine Polsterung eines Sitz- und/oder Liegemöbels, insbesondere eine Matratze eines Bettes bekannt, die einen Grundkörper aufweist, der Stützteile aufweist, auf denen sich bei Benutzung der Stützeinrichtung die Polsterung abstützt, wobei die Stützteile wenigstens ein ortsfestes erstes Stützteil und ein relativ zu dem ersten Stützteil um eine Schwenkachse schwenkverstellbares zweites Stützteil aufweisen. Zum Verstellen des zweiten Stützteiles relativ zu dem ersten Stützteil ist eine Antriebseinrichtung vorgesehen. Das zweite Stützteil ist derart ausgebildet und eingerichtet, dass die Schwenkachse in Längsrichtung der Stützeinrichtung translatorisch verschiebbar gelagert ist, wobei das zweite Stützteil derart mit der Antriebseinrichtung in Antriebsverbindung steht, dass das zweite Stützteil während der Schwenkverstellung wenigstens phasenweise gleichzeitig eine Translationsbewegung weg von dem ersten Stützteil ausführt.

Durch ES 2 156 571 A1 ist eine elektromotorisch verstellbare Stützeinrichtung für eine Polsterung eines Sitz- und/oder Liegemöbels, insbesondere eine Matratze eines Betts, bekannt, die eine Grundkörper aufweist, der Stützteile aufweist, auf denen sich bei Benutzung der Stützeinrichtung die Polsterung abstützt, wobei die Stützteile wenigstens ein ortsfestes erstes Stützteil und ein relativ zu dem ersten Stützteil um eine Schwenkachse schwenkverstellbares zweites Stützteil aufweisen, wobei eine Antriebseinrichtung zum Verstellen des zweiten Stützteiles relativ zu dem ersten Stützteil vorgesehen ist, wobei das zweite Stützteil derart ausgebildet und eingerichtet ist, dass die Schwenkachse in Längsrichtung der Stützeinrichtung translatorisch verschiebbar gelagert ist und wobei das zweite Stützteil derart mit der Antriebseinrichtung) in Antriebsverbindung steht, dass das zweite Stützteil während der Schwenkverstellung wenigstens phasenweise gleichzeitig eine Translationsbewegung weg von dem ersten Stützteil ausführt, wobei das zweite Stützteil ( oder ein damit verbundenes Bauteil während der translatorischen Bewegung auf ein erstes Aufstellelement aufläuft und hierbei verschwenkt.

Durch DE 20 2014 000 212 U1 ist eine elektromotorisch verstellbare Stützeinrichtung mit den Merkmalen des Oberbegriffs des Anspruchs 1 bekannt.

Der Erfindung liegt die Aufgabe zugrunde, eine Stützeinrichtung der im Oberbegriff des Anspruchs 1 genannten Art anzugeben, deren Aufbau vereinfacht ist.

Diese Aufgabe wird durch die im Anspruch 1 angegebene Erfindung gelöst.

Die Erfindung geht davon aus, dass das zweite Stützteil bei einer Verstellung aus einer unverstellten Ausgangslage, in der die Stützteile eine im Wesentlichen horizontale Stützebene aufspannen, in Richtung auf eine maximal verstellte Endlage der Verstellbewegung, in der die Stützteile relativ zueinander verschwenkt sind, sowohl eine Schwenkbewegung als auch eine Translationsbewegung ausführt, um eine Stauchung der Matratze zu vermeiden. Die Erfindung sieht vor, dass das zweite Stützteil oder ein damit verbundenes Bauteil während der translatorischen Bewegung auf ein relativ zu dem ersten Stützteil ortsfestes erstes Aufstellelement aufläuft und hierbei verschwenkt. Auf diese Weise ist eine Verstellmechanik bereitgestellt, die besonders einfach im Aufbau ist.

Die Erfindung sieht einen Schlitten, an dem die Schwenkachse gelagert ist und der durch die Antriebseinrichtung translatorisch bewegbar ist.

Ein weiterer Vorteil der Erfindung besteht darin, dass die Stützeinrichtung besonders robust ist, weil die Verstellmechanik nur relativ wenige Bauteile benötigt.

Die erfindungsgemäße Stützeinrichtung kann bei beliebigen Möbeln Anwendung finden, bei denen Stützteile relativ zueinander schwenkverstellbar sind. Besonders ist die erfindungsgemäße Stützeinrichtung für eine Ausgestaltung als Lattenrost oder als Stützeinrichtung für eine Boxspring-Matratze geeignet.

Die Verstellung des ersten Stützteiles relativ zu dem ersten Stützteil kann entsprechend einer beliebigen geeigneten Kinematik erfolgen. Hierbei ist es beispielsweise möglich, dass das zweite Stützteil während der Verstellung in unterschiedlichen kinematischen Phasen jeweils entweder eine Schwenkbewegung oder eine translatorische Bewegung ausführt. Eine vorteilhafte Weiterbildung der Erfindung sieht insoweit vor, dass das zweite Stützteil derart mit der Antriebseinrichtung in Antriebsverbindung steht, dass das zweite Stützteil während der gesamten Verstellbewegung zwischen einer unverstellten Ausgangslage, in der das zweite Stützteil zusammen mit dem ersten Stützteil eine horizontale oder annhähernd horizontale Stützebene aufspannt, und einer Endlage der Verstellbewegung gleichzeitig sowohl eine Schwenkbewegung als auch eine translatorische Bewegung ausführt. Auf diese Weise ist nicht nur in der Endlage der Verstellbewegung, sondern auch in zwischen der Ausgangslage und der Endlage liegenden Verstelllagen eine Stauchung der Matratze vermieden.

Die Antriebseinrichtung der erfindungsgemäßen Stützeinrichtung kann auf beliebige Weise ausgestaltet sein. Beispielsweise und insbesondere kann die antriebseinrichtung wenigstens einen Bowdenzug-Antrieb aufweisen. Aufbau und Funktionsweise eines entsprechenden Bowdenzug-Antriebes sind aus der EP 2 792 277 A1 bekannt, deren Offenbarungsgehalt hiermit durch Bezugnahme vollinhaltlich in die vorliegende Anmeldung aufgenommen wird.

Eine vorteilhafte Weiterbildung der Erfindung sieht im Hinblick auf die Antriebseinrichtung vor, dass dieselbe zur translatorischen Bewegung des zweiten Stützteiles einen Linearantrieb aufweist. Der Linearantrieb kann beispielsweise und insbesondere als Spindeltrieb ausgebildet sein, wobei das Abtriebsorgan des Spindeltriebes beispielsweise und insbesondere durch eine Spindelmutter gebildet sein kann, die verdrehsicher und in Axialrichtung beweglich auf einer Gewindespindel angeordnet ist, die mit einem Elektromotor in Drehantriebsverbindung steht. Hierbei kann die Spindelmutter beispielsweise und insbesondere den Schlitten bilden, an dem die Schwenkachse gelagert ist. In kinematischer Umkehrung der zuvor genannten Ausführungsform kann das Abtriebsorgan des Spindeltriebes jedoch auch durch eine Gewindespindel gebildet sein, die verdrehsicher und in Axialrichtung beweglich gelagert ist und auf der eine durch einen Elektromotor drehantreibbare, ortsfeste Spindelmutter angeordnet ist.

Eine vorteilhafte Weiterbildung der Ausführungsform mit dem Schlitten sieht vor, dass der Schlitten an einer Längsführung translatorisch bewegbar gelagert ist.

Eine andere vorteilhafte Weiterbildung der Erfindung sieht vor, dass das erste Aufstellelement seitlich neben einer translatorischen Bewegungsbahn des zweiten Stützteiles angeordnet ist und dass mit dem zweiten Stützteil ein zweites Aufstellelement verbunden ist, wobei das erste Aufstellelement in der Bewegungsbahn des zweiten Aufstellelementes derart angeordnet ist, dass das zweite Aufstellelement während der translatorischen Bewegung des zweiten Stützteiles mit dem ersten Aufstellelement zum Verschwenken des zweiten Stützteiles zusammmenwirkt. Auf diese Weise ist sichergestellt, dass das zweite Stützteil in der unverstellten Ausgangslage horizontal oder annähernd horizontal angeordnet sein kann, um mit dem ersten Stützteil eine horizontale oder im Wesentlichen horizontale Stützebene aufzuspannen, gleichzeitig jedoch zu Beginn der Verstellbewegung ein Totpunkt beim Verschwenken des zweiten Stützteiles auf einfache Weise überwunden werden kann, indem das mit dem zweiten Stützteil verbundene zweite Aufstellelement auf das erste Aufstellelement aufläuft.

Eine außerordentlich vorteilhafte Weiterbildung der Erfindung sieht vor, dass das Aufstellelement das Verschwenken des zweiten Stützteiles entsprechend dem Wirkungsprinzip einer schiefen Ebene oder eines Kurvengetriebes bewirkt.

Eine vorteilhafte Weiterbildung der Ausführungsform mit dem Kurvengetriebe sieht vor, dass wenigstens ein Aufstellelement an seinem äußeren Umfang als Kurvenkörper ausgebildet ist, derart, dass das erste Aufstellelement und das zweite Aufstellelement nach Art eines Kurvengetriebes miteinander zusammenwirken.

Eine vorteilhafte Weiterbildung der vorgenannten Ausführungsform sieht vor, dass zusammenwirkende Auflaufflächen des ersten Aufstellelementes und des zweiten Aufstellelementes zueinander wenigstens abschnittsweise komplementär oder annähernd komplementär ausgebildet sind.

Eine andere vorteilhafte Weiterbildung der Erfindung sieht vor, dass das erste Aufstellelement und/oder das zweite Aufstellelement derart ausgebildet und eingerichtet ist bzw. sind, dass sich der zum Verschwenken des zweiten Stützteiles wirksame Hebelarm von einer unverstellten Ausgangslage in Richtung auf eine Endlage der Verstellbewegung des zweiten Stützteiles hin verlängert.

Die Erfindung wird nachfolgend unter Bezugnahme auf die beigefügte Zeichnung näher erläutert, in der Ausführungsbeispiele einer erfindungsgemäßen Stützeinrichtung dargestellt sind. Dabei bilden alle in der Beschreibung beschriebenen, in der Zeichnung dargestellten und in den Patentansprüchen beanspruchten Merkmale für sich genommen sowie in beliebiger geeigneter Kombination miteinander den Gegenstand der Erfindung, unabhängig von ihrer Zusammenfassung in den Patentansprüchen sowie unabhängig von ihrer Beschreibung bzw. Darstellung in der Zeichnung. Zum Offenbarungsgehalt der vorliegenden Anmeldung gehören auch Unterkombinationen des Anspruchs 1, bei denen einzelne oder mehrere Merkmale des Anspruchs 1 weggelassen oder durch andere Merkmale ersetzt sind.

Es zeigt:
- FIG. 1: eine Perspektivansicht eines ersten Ausführungsbeispieles einer erfindungsgemäßen Stützeinrichtung in Form eines Lattenrostes in einer unverstellten Ausgangslage,
- FIG. 2: in gleicher Darstellung wie FIG. 1 das Ausführungsbeispiel gemäß FIG. 1 in einer Endlage der Verstellbewegung eines Oberkörperstützteiles und eines Beinstützteiles,
- FIG. 3: in gleicher Darstellung wie FIG. 1 das Ausführungsbeispiel gemäß FIG. 1, wobei aus Gründen der Veranschaulichung einige Bauteile weggelassen sind,
- FIG. 4: in gleicher Darstellung wie FIG. 2 Einzelheiten einer Antriebseinrichtung der Stützeinrichtung gemäß FIG. 1,
- FIG. 5: in gleicher Darstellung wie FIG. 4 Einzelheiten der Antriebseinrichtung aus einer anderen Perspektive,
- FIG. 6: in gleicher Darstellung wie FIG. 5, jedoch in vergrößertem Maßstab, eine Einzelheit aus FIG. 5,
- FIG. 7: in gleicher Darstellung wie FIG. 5 die Antriebseinrichtung aus FIG. 5, wobei zur Verdeutlichung der Verstellung des Kopfstützteiles relativ zu dem Oberkörperstützteil weitere Bauteile der Stützeinrichtung weggelassen sind,
- FIG. 8: in gleicher Darstellung wie FIG. 7, jedoch aus einer anderen Perspektive die Stützeinrichtung gemäß FIG. 2, wobei noch weitere Bauteile der Stützeinrichtung weggelassen sind,
- FIG. 9: aus einer anderen Perspektive und in vergrößertem Maßstab eine Einzelheit aus FIG. 8,
- FIG. 10: in perspektivischer Darstellung ein zweites Ausführungsbeispiel einer erfindungsgemäßen Stützeinrichtung in der Ausgangslage der Verstellbewegung, in der die Stützteile eine horizontale Stützebene aufspannen,
- FIG. 11: in gleicher Darstellung wie FIG. 10 die Stützeinrichtung gemäß FIG. 10, wobei sich die Stützteile in einer Verstelllage befinden, die zwischen der Ausgangslage und der Endlage der Verstellbewegung liegt,
- FIG. 12: in gleicher Darstellung wie FIG. 10 die Stützeinrichtung gemäß FIG. 10, wobei sich die Stützteile in der Endlage der Verstellbewegung befinden,
- FIG. 13: in gleicher Darstellung wie FIG. 10 die Stützeinrichtung gemäß FIG. 10, wobei zur Verdeutlichung des Aufbaus der Antriebseinrichtung Bauteile der Stützeinrichtung weggelassen sind,
- FIG. 14A: in gleicher Darstellung wie FIG. 13, jedoch in einer etwas geänderten Perspektive die Stützeinrichtung gemäß FIG. 10,
- FIG. 14B: in gleicher Darstellung wie FIG. 13 die Stützeinrichtung gemäß FIG. 10 in der Endlage der Verstellbewegung.
- FIG. 15: in gleicher Darstellung wie FIG. 1 ein drittes Ausführungsbeispiel einer erfindungsgemäßen Stützeinrichtung in einer ersten Verstelllage,
- FIG. 16: in gleicher Darstellung wie FIG. 15 die Stützeinrichtung gemäß FIG. 15 in einer zweiten Verstelllage, die einer maximalen Verstelllage entspricht,
- FIG. 17: in gleicher Darstellung wie FIG. 15, jedoch in größerem Maßstab eine Einzelheit aus FIG. 15, wobei der Übersichtlichkeit halber weitere Bestandteile der Stützeinrichtung weggelassen sind,
- FIG. 18: in gleicher Darstellung wie FIG. 17 eine Einzelheit aus FIG. 17,
- FIG. 19: in gleicher Darstellung wie FIG. 18 die Einzelheit aus FIG. 18 in einer Verstelllage, die der in FIG. 16 dargestellten Verstelllage der Stützeinrichtung entspricht,
- FIG. 20: in einer Perspektivansicht ein Bestandteil eines vierten Ausführungsbeispieles einer erfindungsgemäßen Stützeinrichtung in einer Ausgangslage der Verstellbewegung,
- FIG. 21: in gleicher Darstellung das Ausführungsbeispiel gemäß FIG. 20, wobei aus Gründen der Veranschaulichung eine Profilschiene weggelassen ist,
- FIG. 22: in gleicher Darstellung wie FIG. 21 das Ausführungsbeispiel gemäß FIG. 22 in einer ersten Verstelllage,
- FIG. 23: in gleicher Darstellung wie FIG. 22 das Ausführungsbeispiel gemäß FIG. 21 in einer zweiten Verstelllage, die einer Endlage der Verstellbewegung entspricht,
- FIG. 24: in einer Perspektansicht ein fünftes Ausführungsbeispiel einer erfindungsgemäßen Stützeinrichtung in einer Ausgangslage der Verstellbewegung,
- FIG. 25: in gleicher Darstellung wie FIG. 24 die Stützeinrichtung gemäß FIG. 25 in einer ersten Verstelllage,
- FIG. 26: in gleicher Darstellung wie FIG. 24 die Stützeinrichtung gemäß FIG. 24 in einer zweiten Verstelllage, die einer Endlage der Verstellbewegung entspricht,
- FIG. 27: in gleicher Darstellung wie FIG. 24 die Stützeinrichtung gemäß FIG. 24, wobei aus Gründen der Veranschaulichung Bestandteile der Stützeinrichtung weggelassen sind,
- FIG. 28: in gleicher Darstellung wie FIG. 27 die Stützeinrichtung gemäß FIG. 24 in der Endlage der Verstellbewegung,
- FIG. 29: eine Einzelheit aus FIG. 28, wobei weitere Bestandteile der Stützeinrichtung weggelassen sind und
- FIG. 30: eine Einzelheit aus FIG. 29, wobei weitere Bestandteile der Stützeinrichtung weggelassen sind.

In den Figuren der Zeichnung sind gleiche bzw. sich entsprechende Bauteile mit den gleichen Bezugszeichen versehen. Die Zeichnung stellt schematisch Ausführungsbeispiele einer erfindungsgemäßen Stützeinrichtung dar. Aus Gründen der Veranschaulichung sind in einzelnen Figuren der Zeichnung Bauteile der Stützeinrichtung weggelassen. Diese Bauteile sind gedanklich sinngemäß entsprechend zu ergänzen.

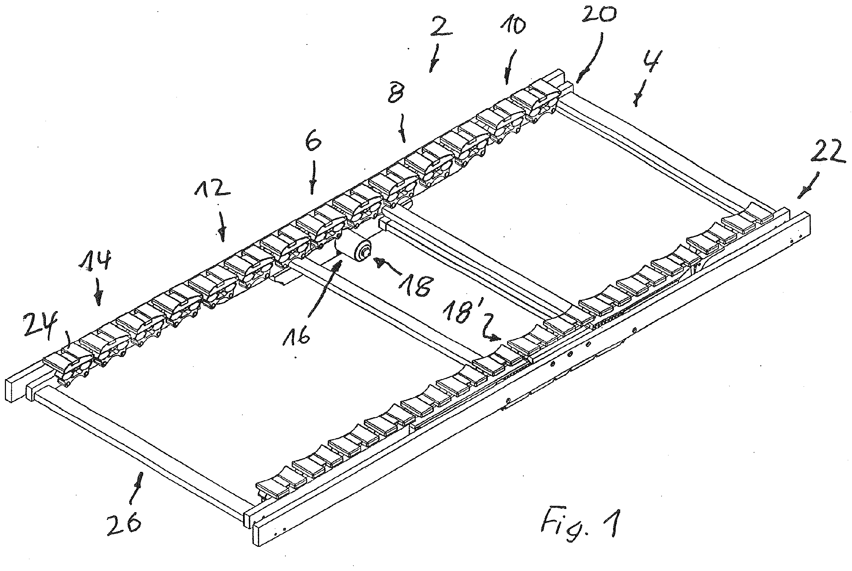

Zur Erläuterung eines ersten Ausführungsbeispieles der Erfindung wird nachfolgend auf die Figuren 1 bis 9 Bezug genommen.

In FIG. 1 ist ein erstes Ausführungsbeispiel einer erfindungsgemäßen elektromotorisch verstellbaren Stützeinrichtung 2 dargestellt, die bei diesem Ausführungsbeispiel als Lattenrost ausgebildet ist. Die Stützeinrichtung 2 weist einen Grundkörper 4 auf, der Stützteile aufweist, auf denen sich bei Benutzung der Stützeinrichtung 2 eine Matratze eines Bettes abstützt. Aus Gründen der Veranschaulichung ist die Matratze in der Zeichnung durchgehend weggelassen.

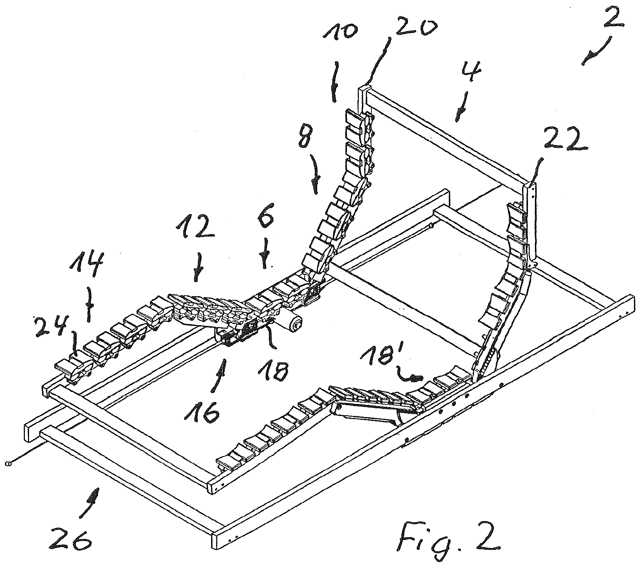

Die Stützeinrichtung 2 weist bei dem dargestellten Ausführungsbeispiel (vgl. FIG. 2) ein ortsfestes mittleres Stützteil 6 auf, mit dem gelenkig und um eine horizontale Schwenkachse schwenkverstellbar ein Oberkörperstützteil 8 verbunden ist, mit dessen dem mittleren Stützteil 6 abgewandten Ende gelenkig und um eine horizontale Schwenkachse schwenkverstellbar ein Kopfstützteil 10 verbunden ist. Mit dem dem Oberkörperstützteil 8 abgewandten Ende des mittleren Stützteiles 6 ist gelenkig und um eine horizontale Schwenkachse schwenkverstellbar ein Beinstützteil 12 verbunden, mit dessen dem mittleren Stützteil 6 abgewandten Ende gelenkig und um eine horizontale Schwenkachse schwenkverstellbar ein Wadenstützteil 14 verbunden ist.

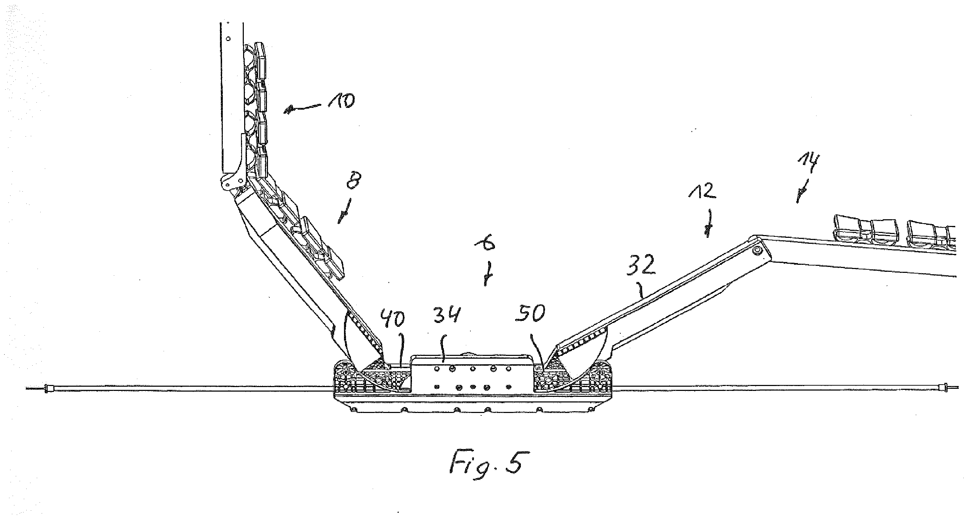

Zur Schwenkverstellung der Stützteile 6 bis 14 relativ zueinander ist eine elektromotorische Antriebseinrichtung 16 vorgesehen, die eine Antriebseinheit 18 aufweist, die an einem ersten Längsholm 20 an dem mittleren Stützteil 6 angeordnet ist. An einem quer zur Längsrichtung der Stützeinrichtung 2 zu dem ersten Längsholm 20 beabstandeten zweiten Längsholm 22 ist eine weitere Antriebseinheit 18' der elektromotorischen Antriebseinrichtung 16 angeordnet. Die Antriebseinheiten 18, 18' werden weiter unten anhand der Figuren 5 bis 9 näher erläutert.

Mit den Stützteilen 6 bis 14 sind Lattenhalter verbunden, an denen bei Benutzung der Stützeinrichtung 2 federnde Latten gehalten sind, auf denen sich die Matratze abstützt. In der Zeichnung (vgl. FIG. 1 und FIG. 2) ist lediglich ein Lattenhalter mit dem Bezugszeichen 24 versehen. Die federnden Latten sind aus Gründen der Veranschaulichung in der Zeichnung nicht dargestellt.

FIG. 1 zeigt die Stützeinrichtung 2 in einer unverstellten Ausgangslage der Stützteile 6 bis 14, in der die Stützteile 6 bis 14 miteinander eine horizontale oder annähernd horizontale Stützebene zur Abstützung der Matratze aufspannen.

FIG. 2 zeigt die Stützeinrichtung 2 in einer Endlage der Verstellbewegung, in der das Oberkörperstützteil 8 mit dem Kopfstützteil 10 sowie das Beinstützteil 12 mit dem Wadenstützteil 14 relativ zu dem mittleren Stützteil 6 maximal verschwenkt und damit verstellt sind. Die Ausgangslage der Stützeinrichtung 2 entspricht einer Liegeposition der Stützeinrichtung 2, während die in FIG. 2 dargestellte Endlage einer Sitzposition entspricht. Zwischen der Ausgangslage und der Endlage sind beliebige Verstelllagen möglich.

Aus Gründen der Veranschaulichung sind Spannungsversorgungs- und Steuerungsmittel zur Ansteuerung der Antriebseinheit 16 in der Zeichnung nicht dargestellt. Aufbau und Funktionsweise entsprechender Spannungsversorgungs- und Steuerungsmittel sind dem Fachmann jedoch allgemein bekannt und werden daher hier nicht näher erläutert.

Erfindungsgemäß ist das Oberkörperstützteil 8 derart ausgebildet und eingerichtet, dass die Schwenkachse in Längsrichtung der Stützeinrichtung 2 translatorisch bewegbar gelagert ist. Hierduch wird vermieden, dass die Matratze bei der Schwenkverstellung des Oberkörperstützteiles 8 relativ zu dem mittleren Stützteil 6 gestaucht wird. Damit ist auch in der verstellten Lage des Oberkörperstützteiles 8 ein hoher Komfort für einen Benutzer der Stützeinrichtung 2 gewährleistet. Wie aus einem Vergleich der Figuren 1 und 2 ersichtlich ist, hat die translatorisch bewegbare Lagerung der Schwenkachse zur Folge, dass sich bei einer Verstellung aus der Ausgangslage in Richtung auf die Endlage der Abstand zwischen den in der Ausgangslage (vgl. FIG. 1) benachbart zueinander angeordneten Lattenhaltern an dem mittleren Stützteil 6 und dem Oberkörperstützteil 8 vergrößert. Auf diese Weise wird eine Stauchung der Matratze vermieden.

Entsprechendes gilt auch für eine Verstellung des Beinstützteiles 12 relativ zu dem mittleren Stützteil 6. Die dem Beinstützteil 12 zugeordnete Schwenkachse ist ebenfalls in Längsrichtung der Stützeinrichtung 2 translatorisch bewegbar gelagert. Dementsprechend vergrößert sich bei einer Schwenkverstellung des Beinstützteiles 12 relativ zu dem mittleren Stützteil 6 der Abstand zwischen den Lattenhaltern an dem mittleren Stützteil 6 und dem Beinstützteil 12, die in der Ausgangslage der Verstellbewegung (vgl. FIG. 1) benachbart zueinander angeordnet sind. Somit ist auch im Bereich des Beinstützteiles 12 eine Stauchung der Matratze vermieden. Aufgrund der voneinander unabhängigen Verstellung und translatorischen Bewegung des Oberkörperstützteiles 8 und des Beinstützteiles 12 relativ zu dem mittleren Stützteil 6 ist in jeder Verstelllage eine Stauchung der Matratze vermieden und die Matratze damit in allen Verstelllagen der Stützeinrichtung 2 entstaucht.

Wie aus den Figuren 1 und 2 ersichtlich ist, weist die Stützeinrichtung 2 einen Außenrahmen 26 auf, an dem der Grundkörper 4 befestigt ist.

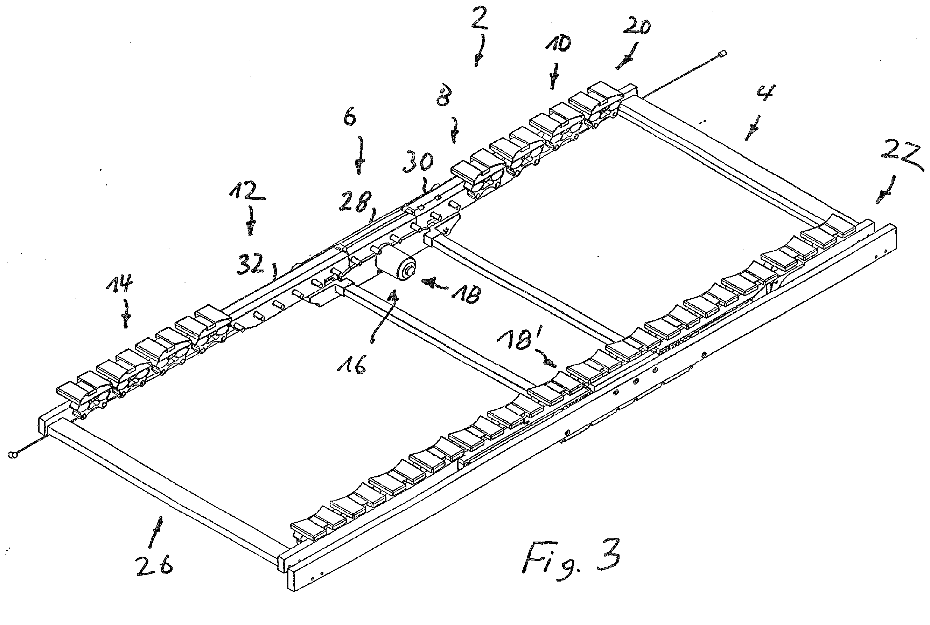

FIG. 3 zeigt die Stützeinrichtung 2 gemäß FIG. 1, wobei aus Gründen der Veranschaulichung an dem ersten Längsholm 20 im Bereich des mittleren Stützteiles 6, des Oberkörperstützteiles 8 und des Beinstützteiles 12 Lattenhalter weggelassen sind, so dass erste Längsholme 28, 30, 32 des mittleren Stützteiles 6 bzw. des Oberkörperstützteiles 8 bzw. des Beinstützteiles 12 erkennbar sind.

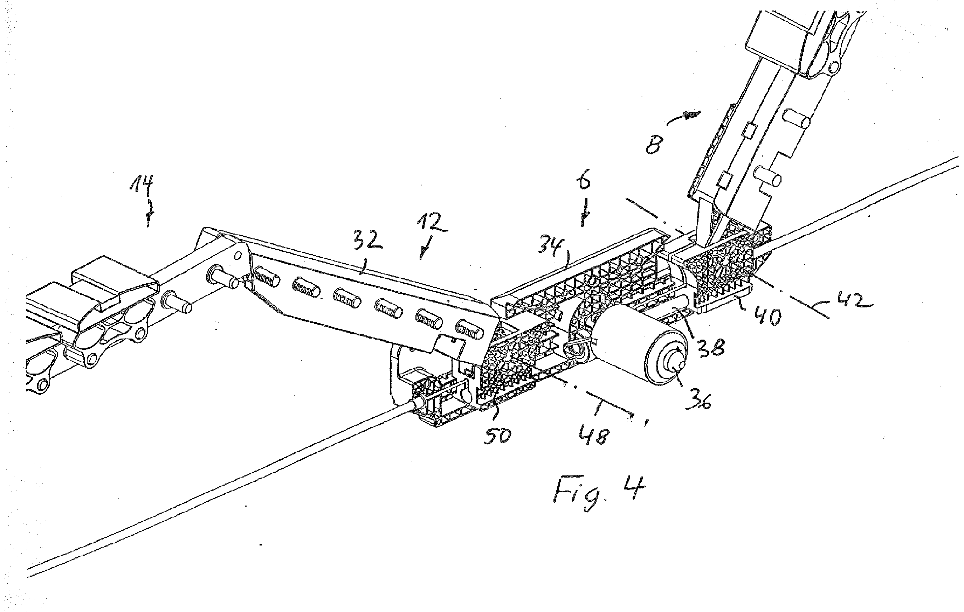

Anhand der Figuren 4 bis 6 wird nachfolgend der Aufbau der erfindungsgemäßen Stützeinrichtung 2 im Hinblick auf die Antriebseinrichtung 16 näher erläutert.

Nachfolgend wird lediglich die dem ersten Längsholm 20 zugeordnete Antriebseinheit 18 näher erläutert. Die dem zweiten Längsholm 22 zugeordnete Antriebseinheit ist entsprechend aufgebaut und wird daher hier nicht näher erläutert.

Die Antriebseinheit 18 weist ein Basiselement 34 auf, das bei diesem Ausführungsbeispiel durch ein Spritzgußteil aus Kunststoff gebildet ist und an dem die Bestandteile der Antriebseinheit 18 angeordnet bzw. gelagert sind. An dem Basiselement 34 ist ein Elektromotor 36 angeordnet, dessen Abtriebswelle in Drehantriebsverbindung mit einer an dem Basiselement 34 ortsfest und drehantreibbar gelagerten Gewindespindel 38 steht. Bei dem dargestellten Ausführungsbeispiel ist die Drehantriebsverbindung zwischen der Abtriebswelle des Elektromotors 36 und der Gewindespindel 38 über ein Schneckengetriebe hergestellt. Das Abtriebsorgan der Antriebseinheit 18 ist durch eine Spindelmutter 40 gebildet, die verdrehsicher und in Axialrichtung der Gewindespindel 38 beweglich auf derselben angeordnet ist.

Die Spindelmutter 40 bildet einen Schlitten, an dem eine Schwenkachse 42 gelagert ist, um die das Oberkörperstützteil 8 relativ zu dem mittleren Stützteil 6 (vgl. FIG. 3 und FIG. 4) verschwenkbar ist.

FIG. 5 zeigt die Antriebseinheit 18 von der dem Elektromotor 36 abgewandten Seite.

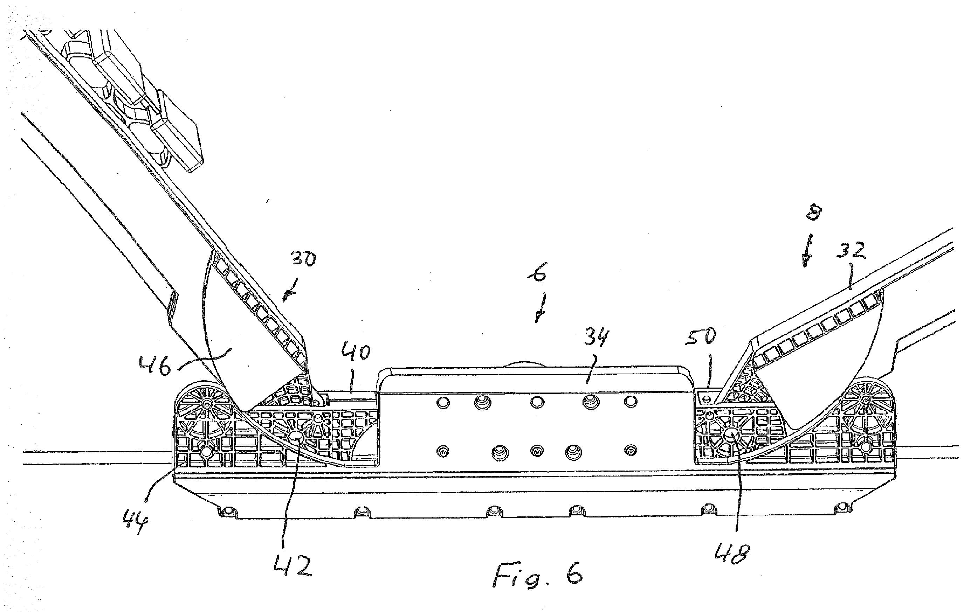

FIG. 6 zeigt die Antriebseinheit 18 in gleicher Darstellung wie FIG. 5, jedoch in vergrößertem Maßstab.

Die Verstellung des Oberkörperstützteiles 8 (zweites Stützteil) relativ zu dem mittleren Stützteil 6 (erstes Stützteil) vollzieht sich derart, dass das zweite Stützteil bzw. ein damit verbundenes Bauteil während der translatorischen Bewegung auf ein erstes Aufstellelement aufläuft und hierbei verschwenkt. Wie anhand von FIG. 4 erläutert, wird mittels des Spindeltriebes 38, 14 eine translatorische Bewegung der Spindelmutter 40 und damit des Oberkörperstützteiles 8 relativ zu dem mittleren Stützteil 6 bewirkt. Bei dem dargestellten Ausführungsbeispiel wird die Schwenkbewegung des Oberkörperstützteiles 8 relativ zu dem mittleren Stützteil 6 dadurch bewirkt, dass seitlich neben der translatorischen Bewegungsbahn der Spindelmutter 40 und damit des Oberkörperstützteiles 8 ein erstes Aufstellelement 44 angeordnet ist, auf das ein mit dem Oberkörperstützteil 8 verbundenes zweites Aufstellelement 46 aufläuft, so dass hierbei das Oberkörperstützteil 8 relativ zu dem mittleren Stützteil 6 verschwenkt.

Das erste Aufstellelement 44 ist einstückig mit dem ersten Längsholm 30 des Oberkörperstützteiles 8 ausgebildet, wobei der erste Längsholm 30 und das zweite Aufstellelement 46 bei dem dargestellten Ausführungsbeispiel ebenfalls durch ein Spritzgußteil aus Kunststoff gebildet sind. Damit ist bei dem dargestellten Ausführungsbeispiel das zweite Aufstellelement 46 schwenkfest mit dem Oberkörperstützteil 8 verbunden. In Abwandlung dieses Ausführungsbeispieles kann das zweite Aufstellelement jedoch auch beweglich mit dem Oberkörperstützteil 8 verbunden sein, sofern in der gewünschten Weise ein Aufstellen des Oberkörperstützteiles 8 und damit ein Verschwenken desselben relativ zu dem mittleren Stützteil 6 bewirkt wird.

Wie insbesondere aus FIG. 6 ersichtlich ist, sind bei dem dargestellten Ausführungsbeispiel die Aufstellelemente 44, 46 im Querschnitt als Kurvenkörper ausgebildet, wobei die Aufstellelemente 44, 46 bei dem dargestellten Ausführungsbeispiel im Querschnitt im Wesentlichen komplementär geformt sind. Wie aus FIG. 6 ersichtlich ist, ist das Oberkörperstützteil 8 in der Ausgangslage (vgl. FIG. 1) horizontal angeordnet, wobei der Totpunkt der Schwenkverstellung des Oberkörperstützteiles 8 bei der translatorischen Bewegung der Spindelmutter 40 überwunden wird und die Schwenkbewegung damit ausgeführt wird.

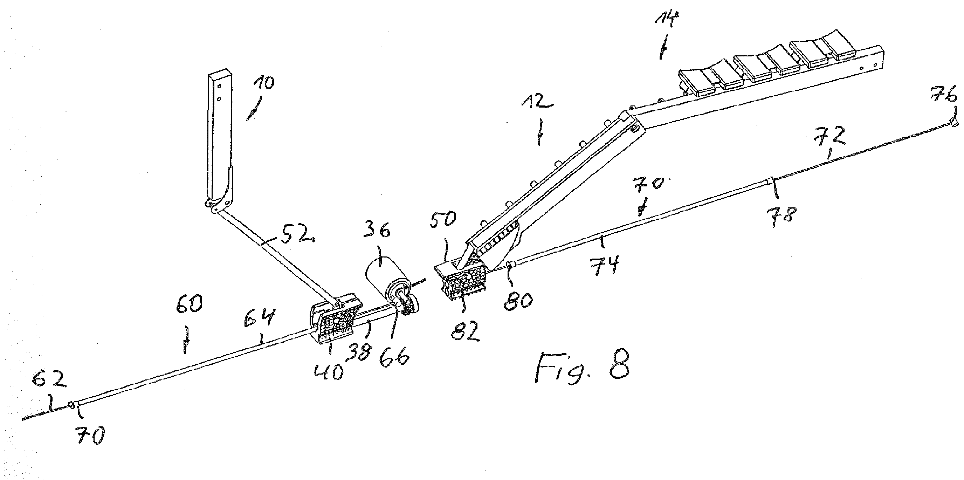

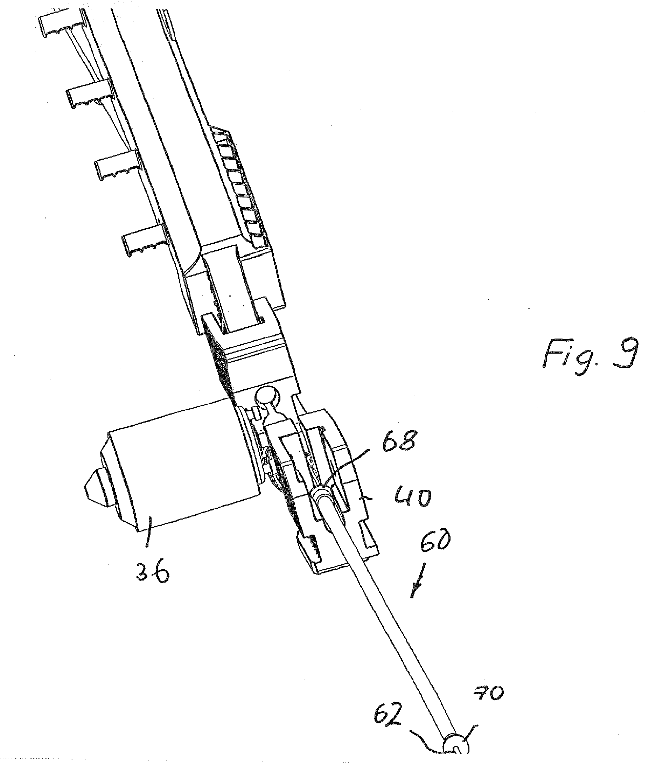

Um eine Verwindung des Oberkörperstützteiles 8 bei der Verstellung zu vermeiden, wird die Translationsbewegung des durch die Spindelmutter 40 gebildeten Schlittens 40 der ersten Antriebseinheit 18 auf einen translatorisch bewegbar gelagerten Schlitten der dem zweiten Längsholm 22 zugeordneten Antriebseinheit übertragen. Hierzu sind Synchronisierungsmittel vorgesehen, die weiter unten anhand der Figuren 8 und 9 näher erläutert werden. Dieser Schlitten, der an der dem zweiten Längsholm 22 vorgesehenen Antriebseinheit translatorisch bewegbar gelagert ist, ist antriebslos, so dass die Verstellung der beiden Längsholme des Oberkörperstützteiles 8 durch den Elektromotor 36 bewirkt wird, wobei durch die Synchronisierungsmittel sichergestellt ist, dass es nicht zu einer Verwindung des Oberkörperstützteiles 8 kommt.

Die Verstellung des Beinstützteiles 12 erfolgt in hierzu entsprechender Weise. Der erste Längsholm 32 des Beinstützteiles 12 ist hierzu um eine Schwenkachse 48 verschwenkbar an einem Schlitten 50 gelagert, der an dem Basiselement 34 der Antriebseinheit 18 translatorisch bewegbar gelagert ist.

Die dem zweiten Längsholm 22 zugeordnete Antriebseinheit weist der Antriebseinheit 18 entsprechend einen Elektromotor auf, der einen Schlitten antreibt, der durch die Spindelmutter eines Spindeltriebes gebildet ist, wie dies zuvor für den Schlitten 40 beschrieben worden ist. Translationsbewegungen dieses angetriebenen Schlittens der dem zweiten Längsholm 22 zugeordneten Antriebseinheit werden durch die weiter unten näher erläuterten Synchronisierungsmittel auf den Schlitten 50 übertragen. Somit werden die dem Oberkörperstützteil 8 zugeordneten Schlitten durch den Elektromotor 36 angetrieben, während die Schlitten, die dem Beinstützteil 12 zugeordnet sind, durch den Elektromotor angetrieben werden, der der dem zweiten Längsholm 22 zugeordneten Antriebseinheit zugeordnet ist. Mit anderen Worten bewirkt der Elektromotor 36 eine Verstellung des Oberkörperstützteiles 8 mit dem Kopfstützteil 10, während der entsprechende, dem zweiten Längsholm 22 zugeordnete Elektromotor eine Verstellung des Beinstützteiles mit dem Wadenstützteil bewirkt.

Aufgrund der schwenkbeweglichen Verbindung des Wadenstützteiles 14 mit dem Beinstützteil 12 verschwenkt das Wadenstützteil 14 aufgrund seiner Schwerkraft relativ zu dem Beinstützteil 12, wenn dasselbe verschwenkt wird. Die Endlage der Verstellbewegung (vgl. FIG. 2) ist durch einen zwischen dem Beinstützteil 12 und dem Wadenstützteil 14 wirkenden Anschlag definiert.

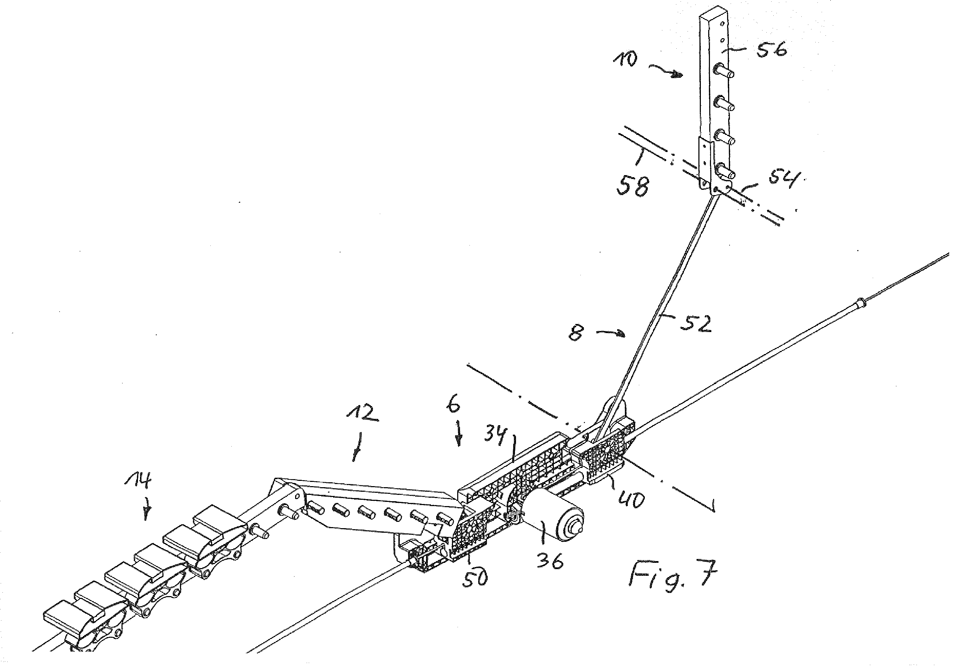

Anhand von FIG. 7 wird nachfolgend die Verstellung des Kopfstützteiles 10 relativ zu dem Oberkörperstützteil 8 erläutert.

Zur Verstellung des Kopfstützteiles 10 ist ein stangenartiges Verstellelement 52 vorgesehen, dessen eines Ende schwenkbeweglich und zu der Schwenkachse 42 koaxial an dem Schlitten 40 gelagert ist. Das andere Ende des Verstellelementes 52 ist um eine Schwenkachse 54 an einem ersten Längsholm 56 des Kopfstützteiles 10 gelagert. Die Schwenksachse 54 ist exzentrisch zu einer Schwenkachse 58 gelagert, um die das Kopfstützteil 10 relativ zu dem Oberkörperstützteil 8 verschwenkbar ist. Aufgrund der zu der Schwenkachse 58 exzentrischen Anordnung der Schwenkachse 54 verschwenkt beim Verschwenken des Oberkörperstützteiles 8 relativ zu dem mitlleren Stützteil 6 das Kopfstützteil 10 relativ zu dem Oberkörperstützteil 8, bis die Endlage der Verstellbewegung erreicht ist (vgl. FIG. 2).

Die Rückstellung der Stützteile 8 bis 14 relativ zu dem mittleren Stützteil 6 in die Ausgangslage (vgl. FIG. 1) erfolgt unter der Gewichtskraft der Stützteile 6 bis 12, gegebenenfalls zusätzlich unter der Last einer auf der Stützeinrichtung 2 ruhenden Person, wobei die Antriebseinrichtung eingeschaltet bleibt.

Bei dem dargestellten Ausführungsbeispiel ist - relativ zu dem mittleren Stützteil 6 (erstes Stützteil) - das erste Aufstellelement 44 ortsfest angeordnet, während das zweite Aufstellelement 46 beweglich angeordnet ist. Entsprechend den jeweiligen Anforderungen ist es jedoch auch möglich, beide Aufstellelemente 44, 46 relativ zu dem ersten Stützteil beweglich anzuordnen.

Die erfindungsgemäßen Synchronisierungsmittel weisen einen Bowdenzug 60 (vgl. FIG. 8) auf, der ein Zugseil (Seele) 62 aufweist, das in einer flexiblen, jedoch in Zugrichtung druckfesten Ummantelung 64 aufgenommen ist. Ein Ende 66 des Zugseiles 62 ist an dem ortsfesten Basiselement 34 festgelegt. Das dem Ende 66 des Zugseiles 62 zugewandte Ende 68 der Ummantelung ist an dem Schlitten 40 verschiebefest festgelegt, wie aus Figur 9 ersichtlich.

Wie im Vorangehenden erläutert, ist an dem zweiten Längsholm 22 ein Schlitten vorgesehen, der dem Schlitten 40 entspricht, jedoch antriebslos ausgebildet ist.

Das dem Ende 66 abgewandte andere Ende des Zugseiles 62 ist an diesem antriebslosen Schlitten verschiebefest festgelegt, während das dem Ende 68 abgewandte andere Ende 69 der Ummantelung an einem dem zweiten Längsholm 22 zugeordneten Basiselement verschiebefest festgelegt ist, an dem der antriebslose Schlitten translatorisch bewegbar gelagert ist. Aus Darstellungsgründen ist die Verbindung des Zugseiles 62 und des Endes 69 der Ummantelung mit diesem antriebslosen Schlitten in der Zeichnung nicht gezeigt.

In der Ausgangslage der Verstellbewegung ist der Abstand der Spindelmutter 40 zu dem an dem Basiselement 34 festgelegten Endes 66 des Zugseiles minimal. Während der Verstellbewegung bewegt sich die Spindelmutter 40 in FIG. 8 translatorisch nach links, wobei das Oberkörperstützteil 8 in der zuvor beschriebenen Weise verschwenkt.

Bei der Translationsbewegung der Spindelmutter 40 in FIG. 8 nach links bleibt das Zugseil 62 des Bowdenzuges 60 ortsfest, während die Ummantelung in FIG. 8 nach links verschoben wird. Aufgrund dieser Verschiebung der Ummantelung verringert sich der Abstand des Endes 70 des Bowdenzuges 60 von dem zugeordneten Ende des Zugseiles 62. Da das Ende 69 an dem dem zweiten Längsholm 22 zugeordneten weiteren Basiselement und das Zugseil an dem diesem Basiselement zugeordneten antriebslosen Schlitten festgelegt ist, bewegt sich dieser Schlitten synchron zu dem durch die Spindelmutter 40 gebildeten Schlitten. Auf diese Weise wird die durch den Elektromotor 36 aufgebrachte Verstellkraft synchron oder annähhernd synchron in die beiden Längsholme des Oberkörperstützteiles 8 eingeleitet, so dass eine Verwindung des Oberkörperstützteiles 8 während der Verstellbewegung vermieden ist.

Wie zuvor bereits beschrieben, weist die dem zweiten Längsholm 22 zugeordnete Antriebseinheit ebenfalls einen durch einen Elektromotor angetriebenen Schlitten in Form einer Spindelmutter auf, wobei die Konfiguration zu der für das Basiselement 34, den Elektromotor 36 und den Spindeltrieb 38, 40 beschriebenen Konfiguration entsprechend ist. Als Synchronisierungsmittel dient ein Bowdenzug 70 mit einem Zugseil 72 und einer Ummantelung 74. Entsprechend der für das Ende 66 des Bowdenzuges 60 beschriebenen Konfiguration ist das Ende 76 des Bowdenzuges 70 an dem dem zweiten Längsholm 22 zugeordneten Basiselement 34 festgelegt, während das dem Ende 76 des Zugseiles 72 zugewandte Ende 78 der Ummantelung 74 an dieser Spindelmutter festgelegt ist. Das dem Ende 78 abgewandte Ende 80 der Ummantelung 74 ist an dem in FIG. 8 nicht dargestellten Basiselement 34 festgelegt, während das dem Ende 76 abgewandte Ende des Zugseiles 72 an einem dem Beinstützteil 12 zugeordneten antriebslosen Schlitten 82 festgelegt ist.

Bei einer Bewegung der dem zweiten Längsholm 22 zugeordneten Spindelmutter in Richtung auf die Endlage der Verstellbewegung, verringert sich der Abstand zwischen dem Schlitten 82 und dem Ende 80 der Ummantelung 74, so dass der Schlitten 82 sich in FIG. 8 nach rechts bewegt. Auf diese Weise wird die von dem dem zweiten Längsholm 22 zugeordneten Elektromotor aufgebrachte Verstellkraft synchron in die beiden Längsholme des Beinstützteiles 12 eingeleitet.

Wie bereits im Vorhergehenden erläutert, bewirkt der dem ersten Längsholm 20 zugeordnete Elektromotor 36 somit eine Verstellung des Oberkörperstützteiles 8 mit dem Kopfstützteil 10 relativ zu dem mittleren Stützteil 6, während der dem zweiten Längsholm 22 zugeordnete Elektromotor eine Verstellung des Beinstützteiles 12 mit dem Wadenstützteil 14 bewirkt.

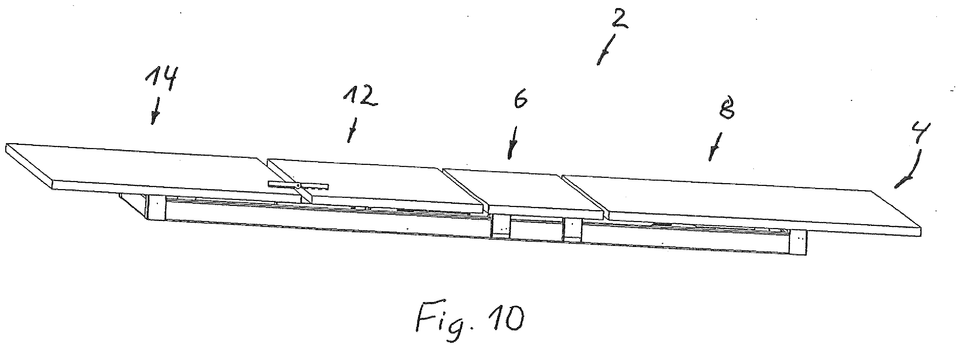

Nachfolgend wird auf die Figuren 10 bis 14B Bezug genommen.

FIG. 10 zeigt das zweite Ausführungsbeispiel in einer FIG.1 entsprechenden Ansicht. Das zweite Ausführungsbeispiel unterscheidet sich von dem ersten Ausführungsbeispiel zunächst dadurch, dass die Stützeinrichtung 2 zur Abstützung einer Boxspring-Matratze ausgebildet ist. Da bei einer solchen Boxspring-Matratze die Federung, die bei einem Lattenrost durch die federnden Latten bereitgestellt wird, in die Matratze integriert ist, sind bei dem Ausführungsbeispiel gemäß FIG. 10 die Stützteile plattenartig ausgebildet.

Bei dem dargestellten Ausführungsbeispiel ist die Stützeinrichtung 4-gliedrig ausgebildet und weist ein ortsfestes mittleres Stützteil 6 auf, mit dem einerseits ein Oberkörperstützteil 8 und andererseits ein Beinstützteil 12 nebst einem Wadenstützteil 14 schwenkverstellbar verbunden ist.

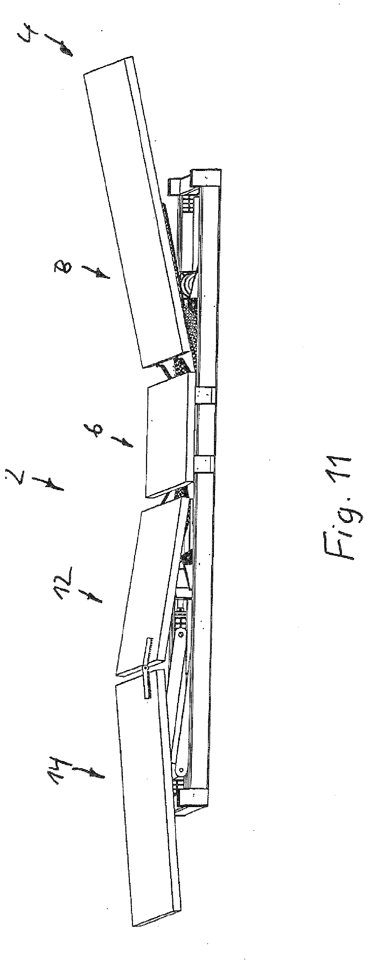

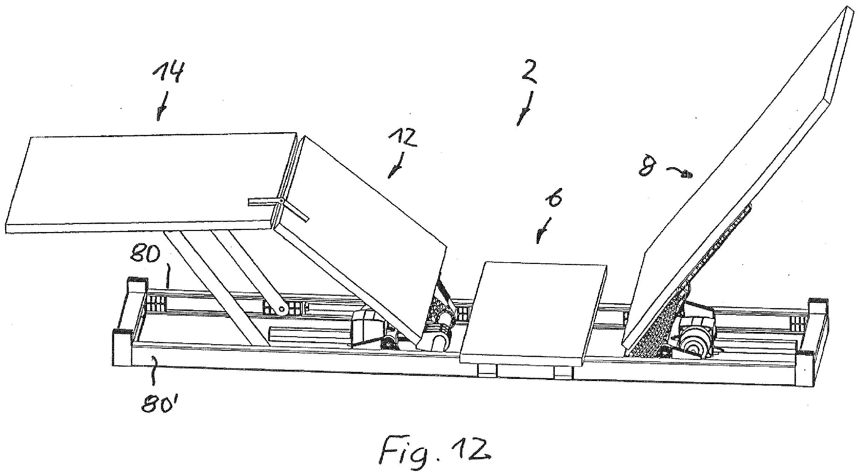

FIG. 11 zeigt die Stützeinrichtung 2 in einer Verstelllage, die zwischen der in FIG. 10 dargestellten Ausgangslage der Verstellbewegung und einer in FIG. 12 dargestellten Endlage der Verstellbewegung liegt, in der die Stützteile 8, 12, 14 relativ zu dem mittleren Stützteil 6 maximal verstellt sind.

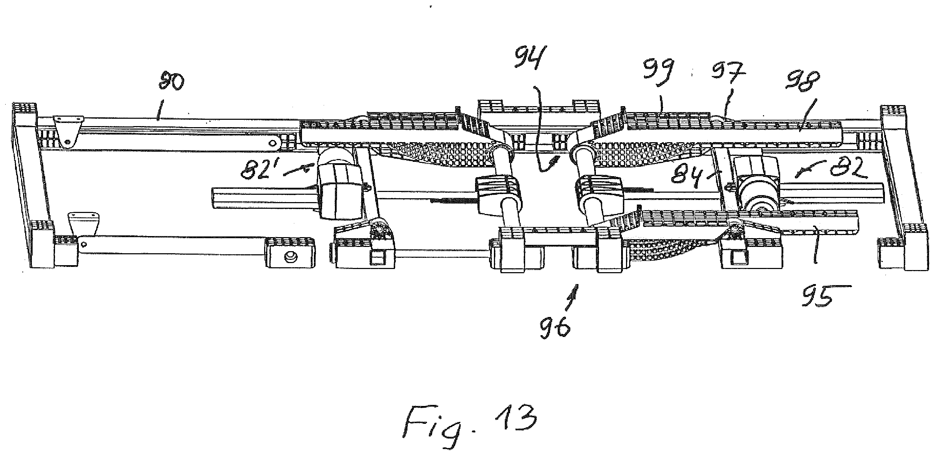

Die Antriebseinrichtung 16 des zweiten Ausführungsbeispieles wird nachfolgend anhand der Figuren 13 bis 14B näher erläutert. Aus Gründen der Veranschaulichung sind in den Figuren 13 bis 14A verschiedene Bauteile der Stützeinrichtung 2 weggelassen.

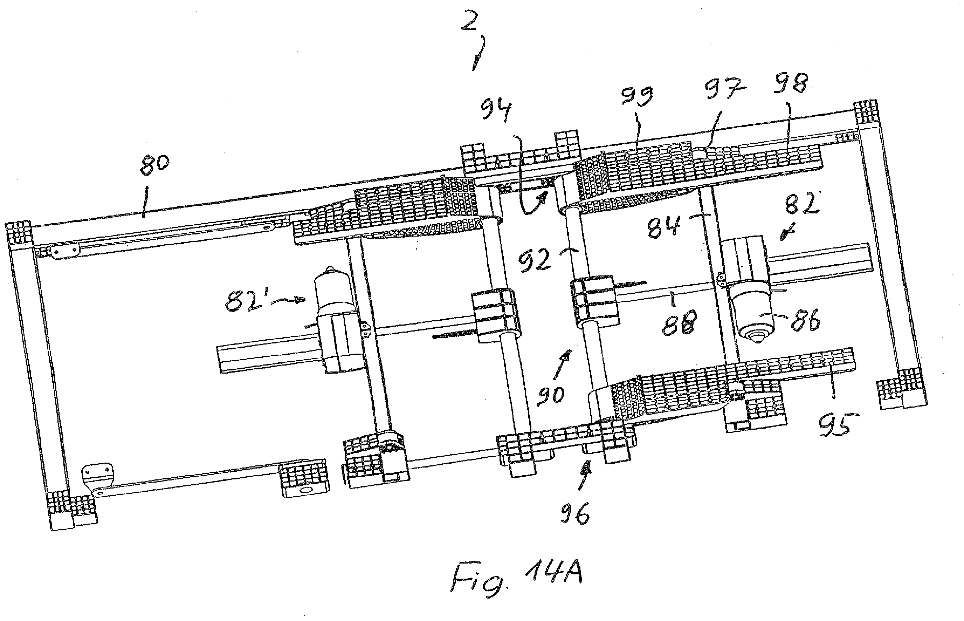

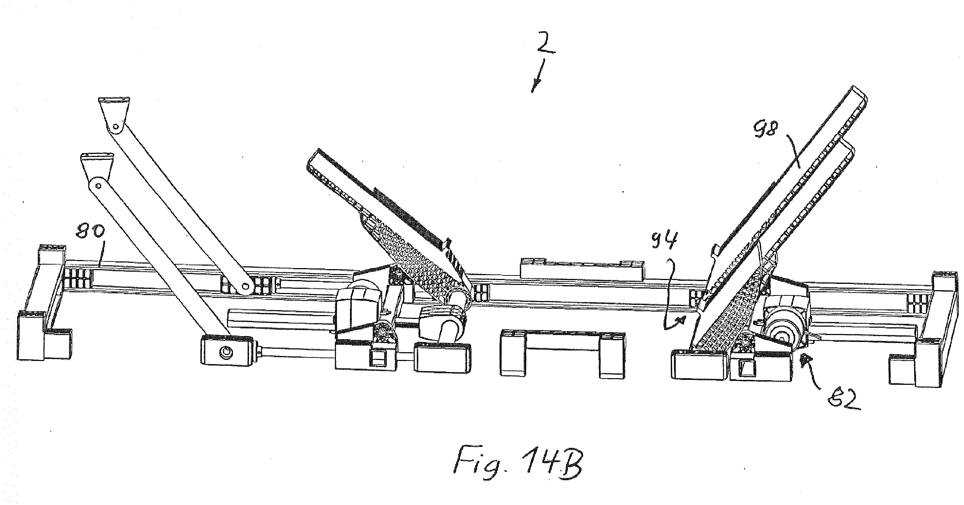

Die Figuren 13 und 14A zeigen die Stützeinrichtung 2 in der Ausgangslage aus unterschiedlichen Perspektiven, während FIG. 14B die Stützeinrichtung 2 in der Endlage der Verstellbewegung zeigt.

Bei diesem Ausführungsbeispiel weist der Außenrahmen 26 Längsholme 80, 80' auf, die jeweils durch ein C-Profil gebildet sind. Die Öffnungen der C-Profile der Längsholme 80, 80' sind dabei einander zugewandt. Zur Verstellung des Oberkörperstützteiles 8 relativ zu dem mittleren Stützteil 6 ist eine Antriebseinheit 82 vorgesehen, während zur Verstellung des Beinstützteiles 12 mit dem Wadenstützteil 14 relativ zu dem mittleren Stützteil 6 eine weitere Antriebseinheit 82' vorgesehen ist. Nachfolgend wird ausschließlich Antriebseinheit 82 näher erläutert. Die Antriebseinheit 82' ist ensprechend aufgebaut, und ihre Bauteile sind mit Bezugszeichen versehen, die den Bezugszeichen der Antriebseinheit 82 entsprechen.

Die Antriebseinheit weist einen an einer ortsfesten ersten Quertraverse 84 angeordneten Elektromotor 86 auf, der mit einer drehantreibbaren Spindelmutter in Drehantriebsverbindung steht, die auf einer verdrehsicheren und in der Axialrichtung beweglichen Gewindespindel 88 angeordnet ist. Das dem Elektromotor 86 und damit der Spindelmutter abgewandte Ende der Gewindespindel 88 ist verschiebefest mit einem Schlitten 90 verbunden, der eine zweite Quertraverse 92 aufweist, mit deren Enden Schlittenelemente 94, 96 verbunden sind, die jeweils in den C-Profilen der Längsholme 80, 80' gefangen und translatorisch bewegbar geführt sind. An der Quertraverse 92 sind um eine durch dieselbe definierte Schwenkachse schwenkbar Längsholme 98, 95 gelagert.

Zur Verstellung des Oberkörperstützteiles 8 relativ zu dem mittleren Stützteil 6 treibt der Elektromotor 86 die Spindelmutter derart an, dass sich der Schlitten 90 translatorisch in Richtung auf die erste Quertraverse 84 bewegt. An der ersten Quertraverse 84 ist ein erstes Aufstellelement 97 angeordnet, das zum Verschwenken des Oberkörperstützteiles 8 mit einem schwenkfest mit dem Längsholm 98 verbundenen zweiten Aufstellelement 99 zusammenwirkt. Das Grundprinzip, wonach das Oberkörperstützteil 8 gleichzeitig eine Translations- und eine Schwenkbewegung ausführt, ist damit das gleiche wie bei dem ersten Ausführungsbeispiel.

Entsprechendes gilt für den anderen Längsholm 95 des Oberkörperstützteiles 8.

Aus den Figuren 14A und 14B ist ersichtlich, dass der Hub der Translationsbewegung des Oberkörperstützteiles 8 bei der Verstellung größer ist als bei dem ersten Ausführungsbeispiel. Dies trägt der Tatsache Rechnung, dass bei einer Boxspring-Matratze ein größerer Hub erforderlich ist, um eine Stauchung zu vermeiden.

Auch bei dem zweiten Ausführungsbeispiel ist sowohl im Bereich des Oberkörperstützteiles 8 als auch im Bereich des Beinstützteiles 12 eine Stauchung der Matratze vermieden.

FIG. 14B zeigt die Stützeinrichtung 2 in der Endlage der Verstellbewegung.

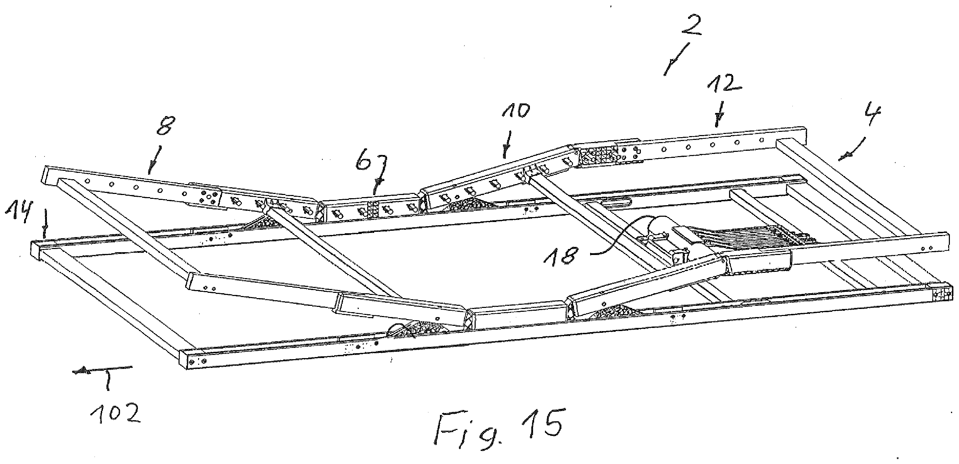

Nachfolgend wird anhand der FIG. 15 bis 19 ein drittes Ausführungsbeispiel einer erfindungsgemäßen Stützeinrichtung in Form eines Lattenrostes 2 näher erläutert.

Bei diesem Ausführungsbeispiel weist die Stützeinrichtung 2 ein mittleres Stützteil 6, ein Oberkörperstützteil 8, ein Beinstützteil 10 und ein Wadenstützteil 12 auf.

In einer Ausgangslage der Verstellbewegung spannen die Stützteile 6, 8, 10, 12 miteinander eine im Wesentlichen horizontale Stützebene zur Abstützung einer in der Zeichnung nicht dargestellten Matratze auf. Zur Vereinfachung der Darstellung sind federnde Latten des Lattenrostes 2 in der Zeichnung nicht dargestellt.

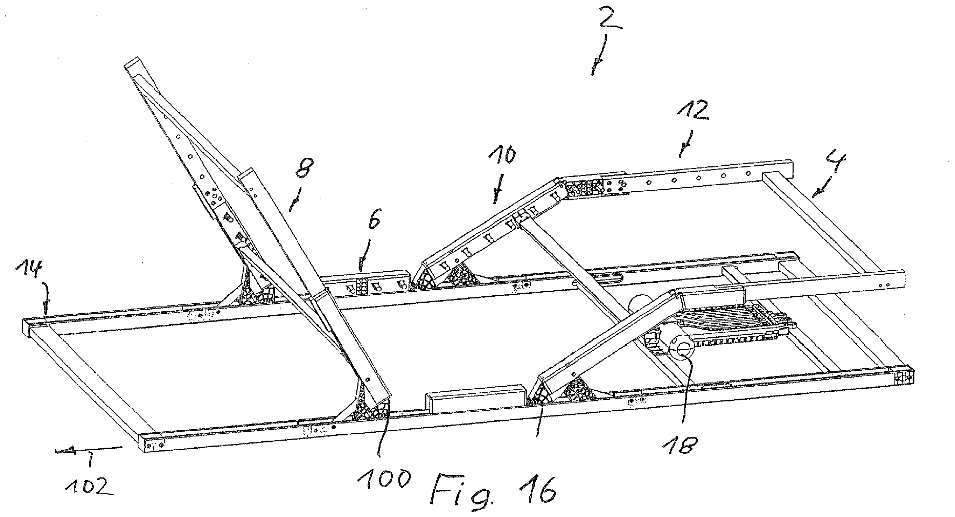

Das erfindungsgemäße Funktionsprinzip wird nachfolgend anhand einer Verstellung des Oberkörperstützteiles 8 näher erläutert. Dem Oberkörperstützteil 8, das um eine horizontale Schwenkachse relativ zu dem ortsfesten mitteleren Stützteil 6 schwenkverstellbar ist, ist zum Verschwenken desselben ein Verstellorgan zugeordnet, das bei diesem Ausführungsbeispiel durch einen Schwenkhebel 100 (vgl. FIG. 16) gebildet ist. Bei diesem Ausführungsbeispiel ist das Oberkörperstützteil 8 derart mit dem Schwenkhebel 100 wirkungsverbunden, dass das Oberkörperstützteil 8 während der Schwenkverstellung wenigstens phasenweise eine Translationsbewegung entlang einer linearen Achse relativ zu dem ortsfesten Stützteil 6 ausführt. Diese lineare Achse ist in FIG. 15 mit dem Bezugszeichen 102 bezeichnet. Wie aus einem Vergleich der FIG. 15 und 16 ersichtlich ist, führt das Oberkörperstützteil 8 während der Schwenkbewegung gleichzeitig eine Translationsbewegung entlang der linearen Achse 102 aus, und zwar derart, dass es sich von dem ortsfesten mittleren Stützteil 6 wegbewegt. Da also das Oberkörperstützteil 8 sowohl eine Schwenkbewegung als auch eine Translationsbewegung ausführt, ist eine Stauchung einer von dem Lattenrost 2 abgestützten Matratze (aus Gründen der Übersichtlichkeit in der Zeichnung nicht dargestellt) vermieden.

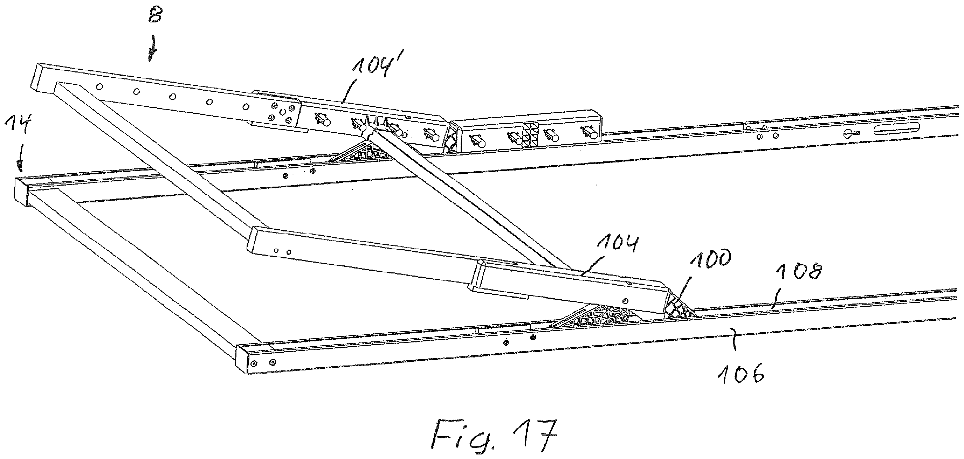

FIG. 17 zeigt eine Einzelheit aus FIG. 15 im Bereich des Schwenkhebels 100, der drehfest mit einem Seitenholm 104 des Oberkörperstützteiles 8 verbunden ist. Der Lattenrost 2 ist zu seiner Längsmittelebene spiegelsymmetrisch aufgebaut. Dementsprechend ist dem anderen Längsholm 104' des Oberkörperstützteiles ebenfalls ein dem Schwenkhebel 100 entsprechender Schwenkhebel 100' zugeordnet, um Verstellkräfte zur Längsmittelebene symmetrisch in das Oberkörperstützteil 8 einzuleiten. Funktion und Aufbau des Schwenkhebels 100' entsprechen demjenigen des Schwenkhebels 100. Aus diesem Grund wird nachfolgend ausschließlich der Schwenkhebel 100 in seinem Aufbau und seiner Funktion näher erläutert.

Der Schwenkhebel 100 ist an einer Linearführung entlang der linearen Achse 102 geführt, wobei diese Linearführung bei dem dargestellten Ausführungsbeispiel eine Profilschiene 106 aufweist. Die Profilschiene 106 ist durch ein C-Profil mit einem Schlitz gebildet, dessen lichte Weite so bemessen ist, dass sich das dem Längsholm 104 zugewandte Ende des Schwenkhebels 100 durch den Schlitz hindurch erstreckt, der Schwenkhebel 100 jedoch mit seinem gegenüberliegenden Ende in der Profilschiene 106 gefangen ist.

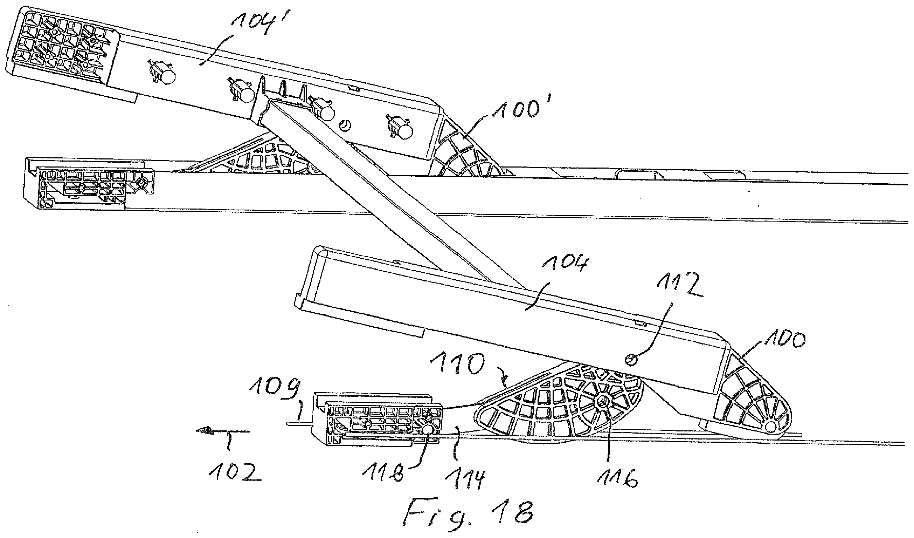

FIG. 18 zeigt eine Einzelheit im Bereich des Schwenkhebels 100, wobei aus Gründen der Veranschaulichung die Profilschiene 106 weggelassen ist.

Dem Schwenkhebel 100 ist ein Aufstellmittel zugeordnet, das zum Aufstellen und Verschwenken des Schwenkhebels 100 während der Translationsbewegung dient.

Um eine Translationsbewegung des Schwenkhebels 100 in der durch den Pfeil 102 gekennzeichneten Richtung zu erzielen, ist das Ende eines Zugseiles eines aus Übersichtlichkeitsgründen in der Zeichnung nicht dargestellten Bowdenzuges an dem Schwenkhebel 100 festgelegt. Das andere Ende des Zugseiles ist zu der Antriebseinheit 18 (vgl. FIG. 15) geführt.

Bei dem dargestellten Ausführungsbeispiel ist das Aufstellmittel ein Aufstellhebel 110, dessen eines Ende gelenkig und um eine zu der Schwenkachse des Schwenkhebels 100 exzentrische und parallele Schwenkachse 110 verschwenkbar mit dem Schwenkhebel 100 verbunden ist. Das andere Ende des Aufstellhebels 110 stützt sich zu Beginn der Verstellbewegung an einer Stützfläche am Grund der durch die Profilschiene 106 gebildeten Führung ab.

Bei dem dargestellten Ausführungsbeispiel ist der Aufbau so gewählt, dass das Zugseil des Bowdenzuges den Schwenkhebel 100 gegen den Aufstellhebel 110 zieht. Damit der Aufstellhebel 110 als Widerlager für das Verschwenken des Schwenkhebels 110 dient, ist dem Aufstellhebel ein Widerlagerelement zugeordnet. Das Widerlagerelement ist bei diesem Ausführungsbeispiel durch eine während des Verschwenkens des Schwenkhebels auf Druck beanspruchte Lasche 114 gebildet, deren eines Ende exzentrisch zu der Schwenkachse 112 um eine Drehachse 116 drehbar mit dem Aufstellhebel 110 verbunden ist und deren anderes Ende drehbar mit einem während der Verstellung des Schwenkhebels 110 ortsfesten Drehlagers 118 verbunden ist.

Ausgehend von einer Ausgangslage der Verstellbewegung, in der das Oberkörperstützteil 8 zusammen mit dem ortsfesten mittleren Stützteil 6 und den weiteren Stützteilen 10, 12 eine im Wesentlichen horizontale Stützebene aufspannt, vollzieht sich die Schwenkverstellung des Oberkörperstützteiles 8 derart, dass über das Zugseil des Bowdenzuges eine Zugwirkung auf den Schwenkhebel 110 ausgeübt wird, so dass der Schwenkhebel 110 eine Translationsbewegung in der Richtung des Pfeiles 102 ausführt, wobei er gegen den Aufstellhebel 110 gezogen wird, der sich aufstellt und hierbei den Schwenkhebel 100 verschwenkt. FIG. 18 zeigt eine Verstelllage, in der sich der Schwenkhebel 110 entgegen einer Ausgangslage der Verstellbewegung sowohl in der Richtung 102 weg von dem mittleren Stützteil 6 bewegt hat als auch um seine Schwenkachse verschwenkt ist.In FIG. 18 ist das dem Schwenkhebel 100 zugeordneten Zugseil des Bowdenzuges mit dem Bezugszeichen 109 bezeichnet.

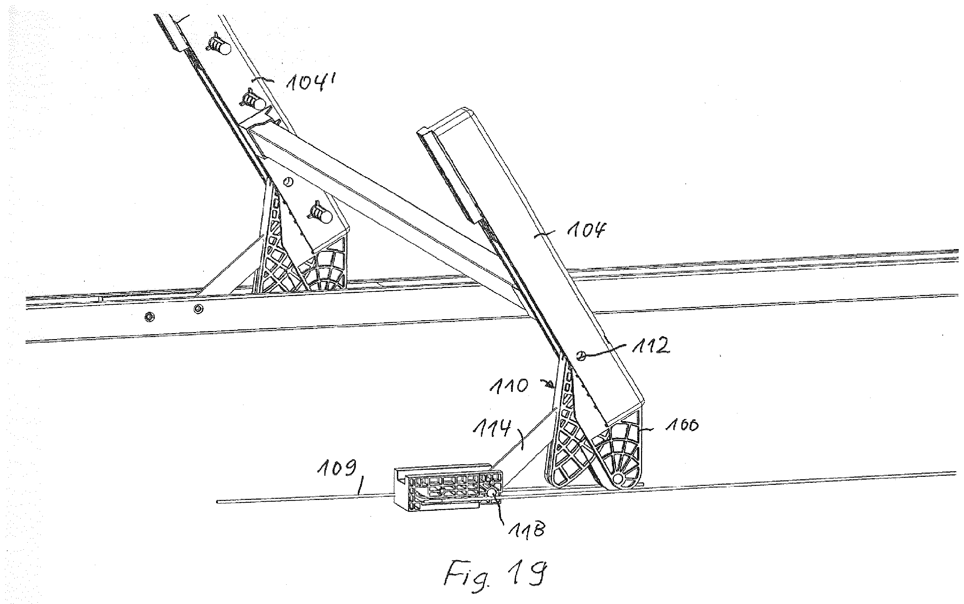

Im weiteren Verlauf der Verstellbewegung bewegt sich der Schwenkhebel 100 weiter in Richtung des Pfeiles 102 translatorisch und wird hierbei weiter verschwenkt, bis die in FIG. 19 dargestellte Endlage der Verstellbewegung erreicht ist, in der der Aufstellhebel 110 vollständig von der durch den Grund der Profilschiene 106 gebildeten Stützfläche abgehoben ist.

Aufgrund der so erzielten Translations- und Schwenkbewegung des Oberkörperstützteiles 8 während der Verstellung ist eine Stauchung einer durch den Lattenrost 2 abgestützten Matratze vermieden oder zumindest verringert.

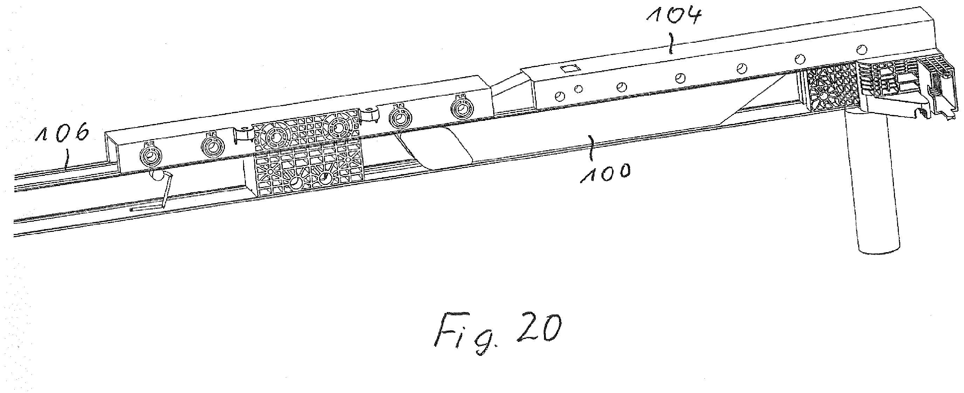

Anhand der FIG. 20 bis 23 wird nachfolgend ein viertes Ausführungsbeispiel einer erfindungsgemäßen Stützeinrichtung erläutert, wobei aus Gründen der Veranschaulichung lediglich der Bereich des Schwenkhebels 100 dargestellt ist. Wie bei dem zuvor geschilderten Ausführungsbeispiel ist der Schwenkhebel mit seinem dem Längsholm 104 des Oberkörperstützteiles 8 abgewandten Ende in der Profilschiene 106 gefangen.

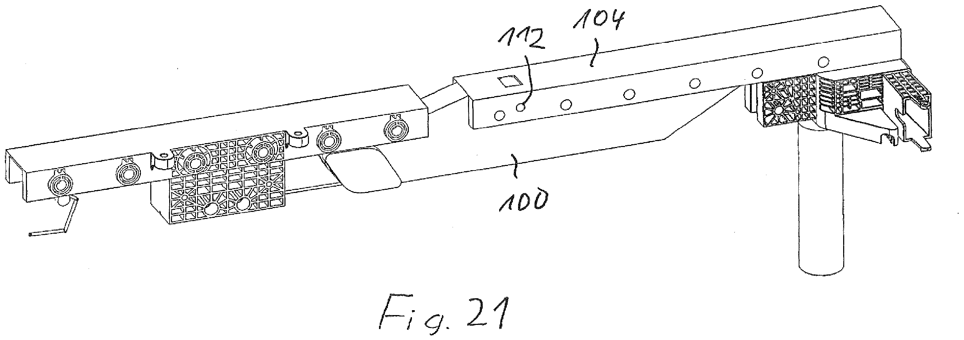

FIG. 20 zeigt die Ausgangslage der Verstellbewegung, in der das Oberkörperstützteil 8 zusammen mit den anderen Stützteilen eine horizontale Stützebene aufspannt. Aus Gründen der Veranschaulichung ist die Profilschiene 106 in den FIG. 21 bis 23 weggelassen.

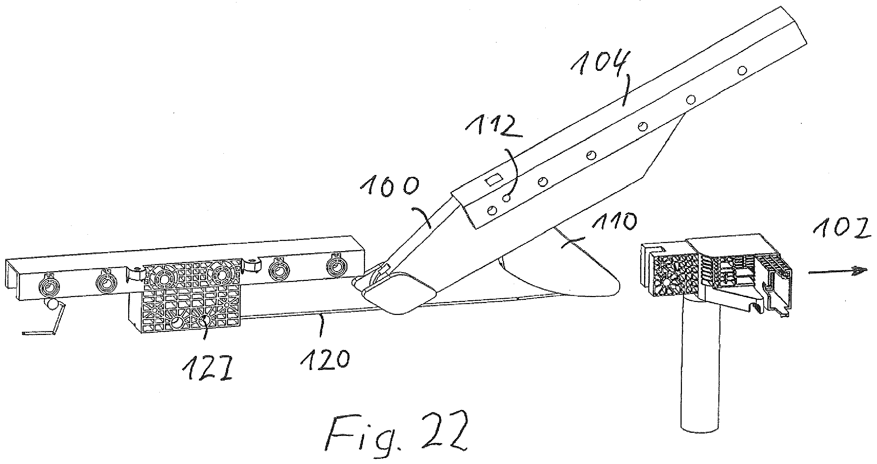

Das in den FIG. 20 bis 23 dargestellte Ausführungsbeispiel unterscheidet sich von dem in den FIG. 15 bis 19 dargestellten Ausführungsbeispiel vor allem dadurch, dass das Widerlagerelement als während des Verschwenkens des Schwenkhebels 100 auf Zug beanspruchtes Seil ausgebildet ist. Das Seil 120 kann beispielsweise durch ein dünnes Drahtseil gebildet sein. Es kann jedoch auch durch ein anderes Band- oder kettenförmiges Zugmittel ersetzt werden. Ein Ende des Seiles 120 ist exzentrisch zu der Schwenkachse 112 an dem Aufstellhebel 110 festgelegt. Das andere Ende des Seiles 120 ist an einem während des Verschwenkens des Schwenkhebels ortsfesten Befestigungspunkt 122 (vgl. FIG. 22) festgelegt.

Aus FIG. 22 ist ersichtlich, dass das Seil 120 unter dem sich auf dem Grund der Profilschiene abstützenden Ende des Schwenkhebels 100 hindurchverläuft und zu dem Befestigungspunkt 122 geführt ist.

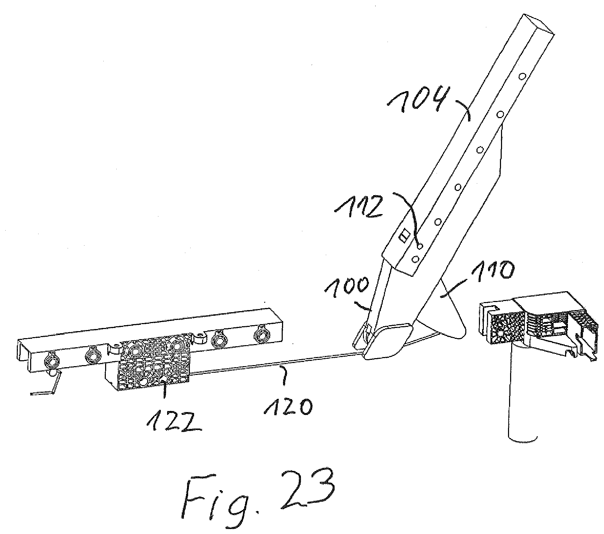

Die Verstellung des Schwenkhebels 100 vollzieht sich ausgehend von der in FIG. 21 dargestellten Ausgangslage der Verstellbewegung derart, dass der Schwenkhebel 100 mittels des wiederum aus Gründen der Übersichtlichkeit halber weggelassenen Bowdenzuges in Richtung des Pfeiles 102 gegen den Aufstellhebel 110 gezogen wird. In der für das vorangegangene Ausführungsbeispiel beschriebenen Weise führt der Schwenkhebel 100 hierbei gleichzeitig eine Translationsbewegung in Richtung des Pfeiles 102 als auch eine Schwenkbewegung in FIG. 22 entgegen dem Uhrzeigersinn aus, bis die in FIG. 23 dargestellte Endlage der Verstellbewegung erreicht ist.

Beide dargestellten Ausführungsbeispiele bilden die Funktion eines Bogenscharniers nach, bei dem die Schwenkachse, um die der Schwenkhebel 100 effektiv verschwenkt wird, in einen Bereich oberhalb des Schwenkhebels 100 und damit faktisch in den Bereich der durch den Lattenrost 2 abgestützten Matratze verlagert wird.

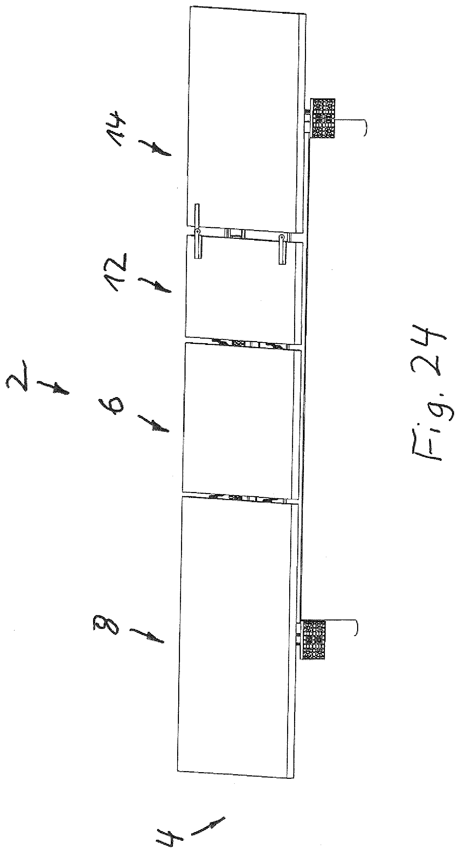

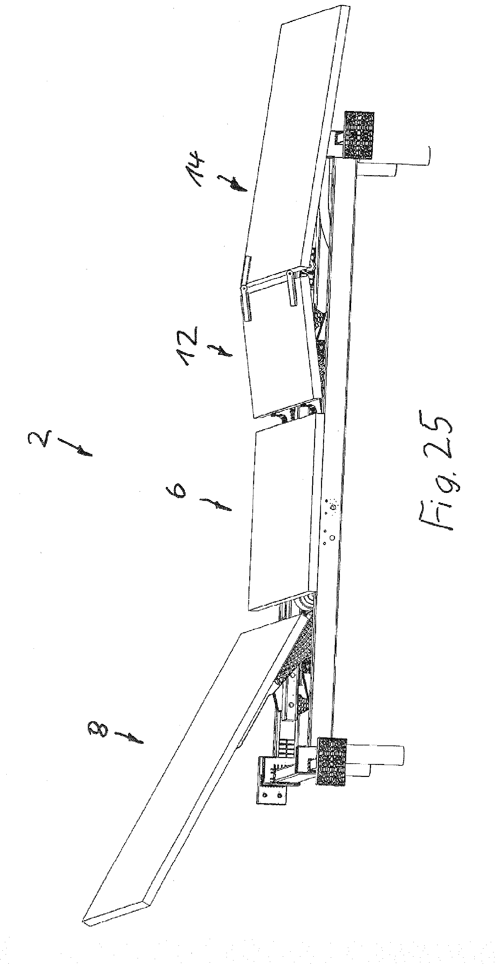

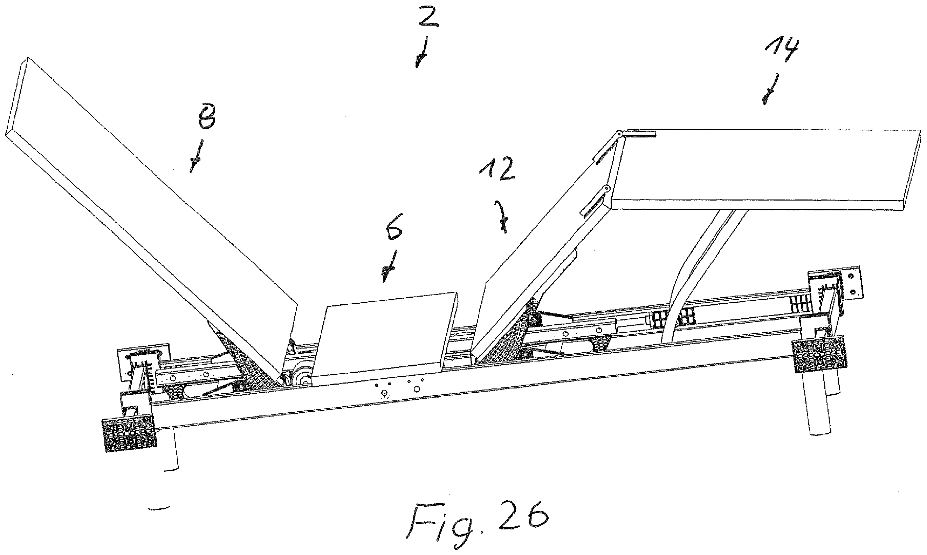

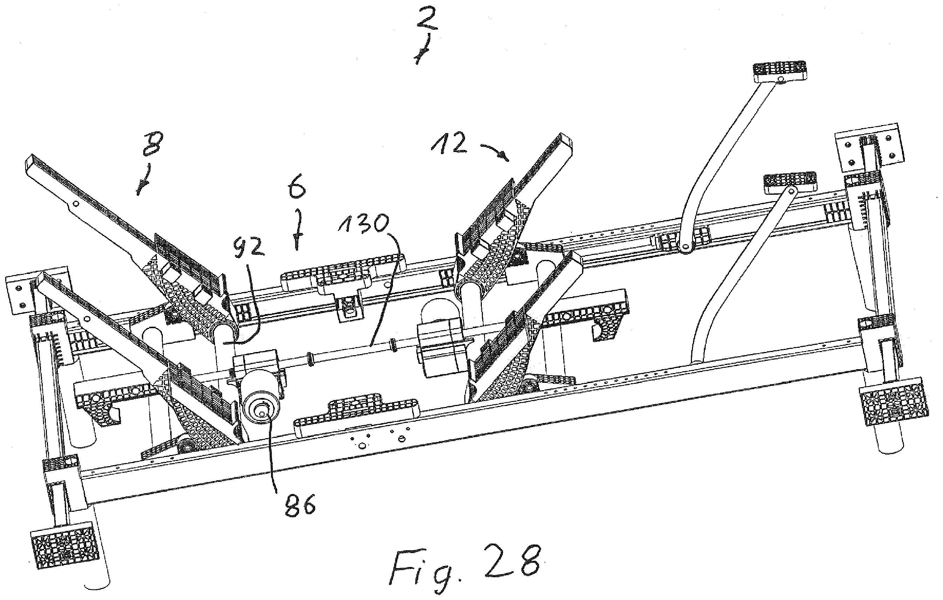

Unter Bezugnahme auf die Figuren 24 bis 30 wird nachfolgend ein fünftes Ausführungsbeispiel einer erfindungsgemäßen Stützeinrichtung 2 erläutert, das in seinem Aufbau und in seiner Funktionsweise weitgehend mit dem Ausführungsbeispiel gemäß den Figuren 10 bis 14B übereinstimmt. Insbesondere ist das in den Figuren 24 bis 30 dargestellte Ausführungsbeispiel ebenfalls zur Abstützung einer Boxspring-Matratze ausgebildet.

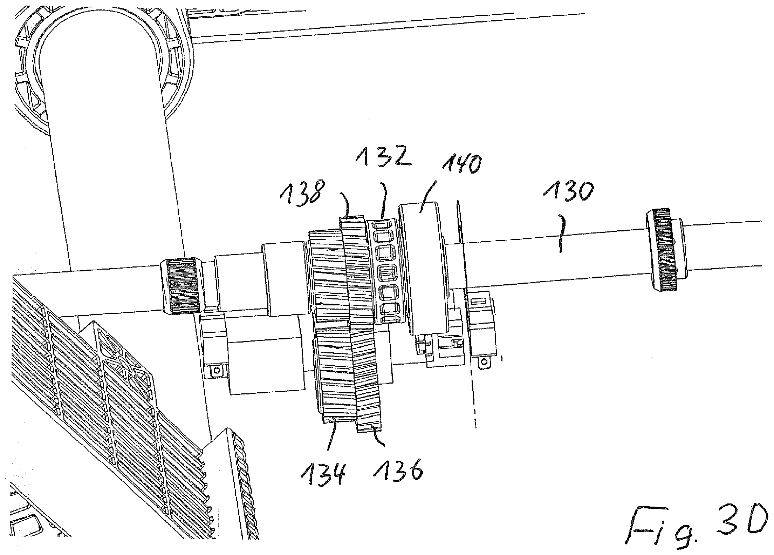

Das Ausführungsbeispiel gemäß den Figuren 24 bis 30 stimmt mit dem Ausführungsbeispiel gemäß den Figuren 10 bis 14B auch insofern überein, als zur Übertragung der Antriebskraft des Elektromotors 86 auf das zu verstellende Stützteil ein Spindeltrieb vorgesehen ist. Gegenüber dem Ausführungsbeispiel in den Figuren 10 bis 14B ist jedoch die Funktionsweise des Spindeltriebs kinematisch umgekehrt. Während bei dem Ausführungsbeispiel gemäß den Figuren 10 bis 14A das Abtriebsorgan der Antriebseinrichtung durch eine in ihrer Axialrichtung beweglich gelagerte Gewindespindel 88 (vgl. FIG. 14A) gebildet ist, auf der eine ortsfeste, mittels des Elektromotors 86 drehantreibbare Spindelmutter angeordnet ist, weist das Ausführungsbeispiel gemäß den Figuren 24 bis 30 eine ortsfest unterhalb der Stützteile 6 bis 14 angeordnete und befestigte Gewindespindel 130 auf. Auf die Gewindespindel 130 ist eine mittels des Elektromotors 86 drehantreibbare Spindelmutter 132 (vgl. FIG. 30) aufgesetzt. Die Abtriebswelle des Elektromotors 86 ist als Schnecke ausgebildet und steht mit einem Schneckenrad 134 in Eingriff, mit dem drehfest ein Stirnrad 136 verbunden ist, das mit einem weiteren Stirnrad 138 in Eingriff steht, das drehfest mit der Spindelmutter 132 verbunden ist. Entsprechend der Drehrichtung der Abtriebswelle des Elektromotors 86 wird dadurch die Spindelmutter 132 in der einen oder anderen Drehrichtung gedreht, so dass sie sich in Axialrichtung der Gewindespindel 133 bewegt.

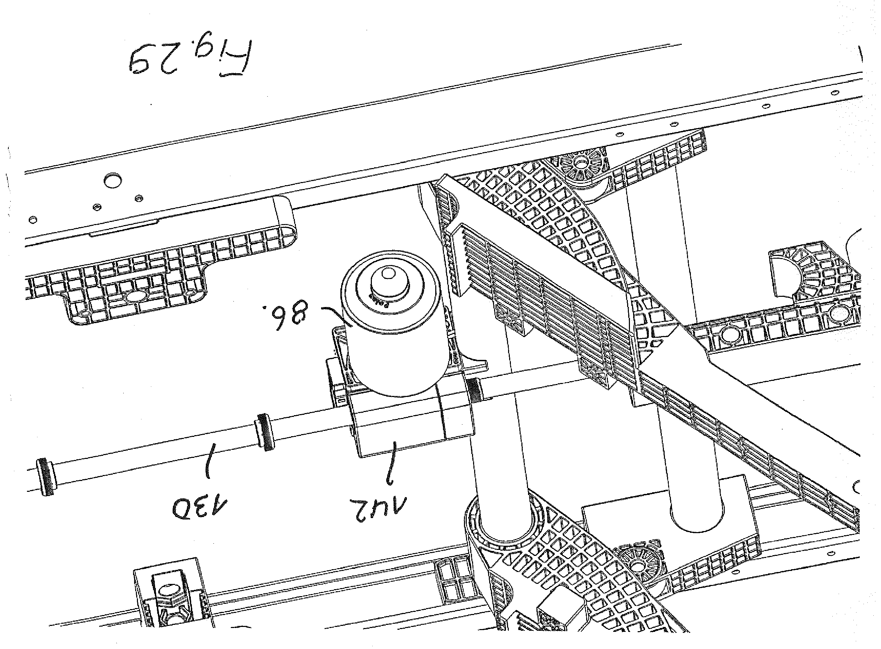

Die Spindelmutter 132 ist mittels eines Kugellagers 140 an einem Gehäuse 142 gelagert, an dem der Elektromotor 86 angeordnet ist. Das Gehäuse 142 ist verschiebefest mit der Quertraverse 92 (vgl. FIG. 29) verbunden.

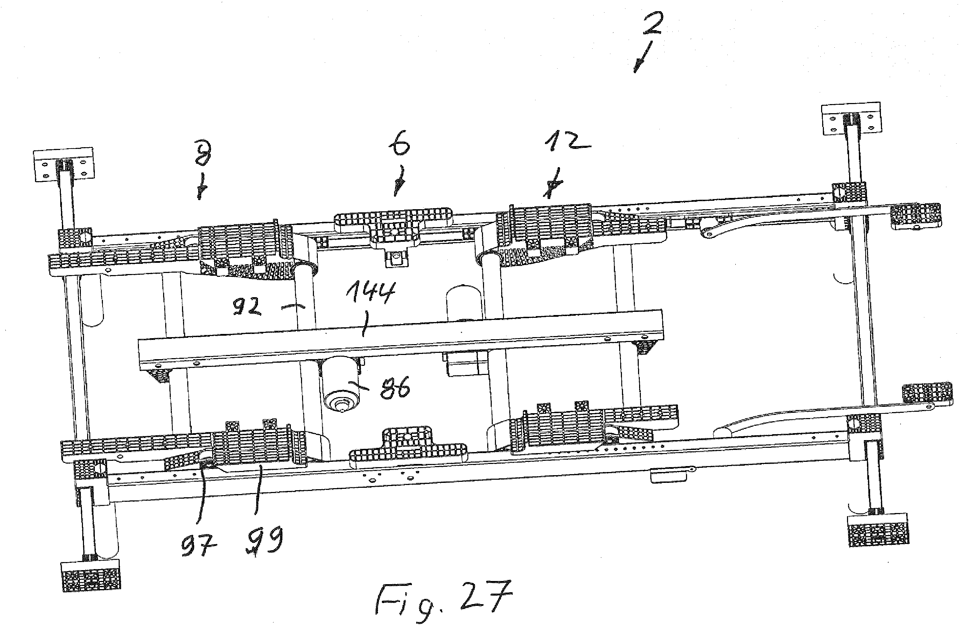

Die Gewindespindel 130 ist mittels einer Abdeckung 144 (vgl. FIG. 27) abgedeckt.

Ausgehend von der in FIG. 27 dargestellten Ausgangslage der Verstellbewegung treibt der Elektromotor 86 zur Verstellung des Oberkörperstützteiles 8 relativ zu dem mittleren Stützteil 6 die Spindelmutter 140 derart an, dass sich diese auf der Gewindespindel 130 in FIG. 27 nach links bewegt. Aufgrund der verschiebefesten Verbindung des Gehäuses 142 mit der Quertraverse 92 wird dabei die Quertraverse 92 in FIG. 27 nach links verschoben, so dass anhand der zuvor für das Ausführungsbeispiel gemäß den Figuren 10 bis 14B beschriebenen Weise das Oberkörperstützteil verschwenkt wird.

Die Verstellmechanik zur Verstellung des Beinstützteiles 12 mit dem Wadenstützteil 14 relativ zu dem mittleren Stützteil 6 ist entsprechend aufgebaut und wird daher hier nicht näher erläutert. Die zugeordnete Spindelmutter läuft ebenfalls auf der Gewindespindel 130.

In den verschiedenen Figuren der Zeichnung und den verschiedenen Ausführungsbeispielen sind gleiche bzw. sich entsprechende Bauteile mit den gleichen Bezugszeichen versehen. Soweit in den Figuren der Zeichnung aus Darstellungs- oder Veranschaulichungsgründen Bauteile weggelassen sind, so sind die betreffenden Bauteile jeweils in den anderen Figuren sinnentsprechend zu ergänzen.

## Patentansprüche

1. Elektromotorisch verstellbare Stützeinrichtung (2) für eine Polsterung eines Sitz- und/oder Liegemöbels, insbesondere eine Matratze eines Betts,
mit einem Grundkörper (4), der Stützteile (6 - 14) aufweist, auf denen sich bei Benutzung der Stützeinrichtung (2) die Polsterung abstützt, wobei die Stützteile (6 - 14) wenigstens ein ortsfestes erstes Stützteil (6) und ein relativ zu dem ersten Stützteil um eine Schwenkachse schwenkverstellbares zweites Stützteil (10) aufweisen, und
mit einer Antriebseinrichtung (16) zum Verstellen des zweiten Stützteiles (10) relativ zu dem ersten Stützteil (6),
wobei das zweite Stützteil (10) derart ausgebildet und eingerichtet ist, dass die Schwenkachse in Längsrichtung der Stützeinrichtung (2) translatorisch verschiebbar gelagert ist und
wobei das zweite Stützteil derart mit der Antriebseinrichtung (16) in Antriebsverbindung steht, dass das zweite Stützteil (10) während der Schwenkverstellung wenigstens phasenweise gleichzeitig eine Translationsbewegung weg von dem ersten Stützteil (6) ausführt,
wobei das zweite Stützteil (10) oder ein damit verbundenes Bauteil während der translatorischen Bewegung auf ein erstes Aufstellelement (44) aufläuft und hierbei verschwenkt und
wobei ein Schlitten (40) vorgesehen ist, an dem die Schwenkachse gelagert ist und der durch die Antriebseinrichtung (16) translatorisch bewegbar ist **dadurch gekennzeichnet,**
**dass** das zweite Stützteil (10) derart mit der Antriebseinrichtung (16) in Antriebsverbindung steht, dass das zweite Stützteil (10) während der gesamten Verstellbewegung zwischen einer unverstellten Ausgangslage, in der das zweite Stützteil (10) zusammen mit dem ersten Stützteil (6) eine horizontale oder annhähernd horizontale Stützebene aufspannt, und einer Endlage der Verstellbewegung gleichzeitig sowohl eine Schwenkbewegung als auch eine translatorische Bewegung ausführt.

2. Stützeinrichtung nach Anspruch 1, **dadurch gekennzeichnet, dass** die Antriebseinrichtung (16) zur translatorischen Bewegung des zweiten Stützteiles (10) einen Linearantrieb aufweist.

3. Stützeinrichtung nach Anspruch 1 oder 2, **dadurch gekennzeichnet, dass** der Schlitten (40) an einer Längsführung translatorisch bewegbar gelagert ist.

4. Stützeinrichtung nach einem der vorhergehenden Ansprüche, **dadurch gekennzeichnet, dass** das erste Aufstellelement (44) seitlich neben einer translatorischen Bewegungsbahn des zweiten Stützteiles (10) angeordnet ist und dass mit dem zweiten Stützteil (10) ein zweites Aufstellelement (46) verbunden ist, wobei das erste Aufstellelement (44) in der Bewegungsbahn des zweiten Auflauflelementes (46) derart angeordnet ist, dass das zweite Aufstellelement (46) während der translatorischen Bewegung des zweiten Stützteiles (10) mit dem ersten Aufstellelement (44) zum Verschwenken des zweiten Stützteiles (10) zusammmenwirkt.

5. Stützeinrichtung nach einem der vorhergehenden Ansprüche, **dadurch gekennzeichnet, dass** das Aufstellelement oder die Aufstellelemente (44, 46) das Verschwenken des zweiten Stützteiles (10) nach dem Wirkungsprinzip einer schiefen Ebene oder eines Kurvengetriebes bewirken.

6. Stützeinrichtung nach Anspruch 5, **dadurch gekennzeichnet, dass** wenigstens ein Aufstellelement (44, 46) an seinem äußeren Umfang als Kurvenkörper ausgebildet ist, derart, dass das erste Aufstellelement (44) und das zweite Aufstellelement (46) nach Art eines Kurvengetriebes miteinander zusammenwirken.

7. Stützeinrichtung nach Anspruch 5 oder 6, **dadurch gekennzeichnet, dass** das erste Aufstellelement (44) und das zweite Aufstellelement (46) im Querschnitt zueinander wenigstens abschnittsweise komplementär oder annähernd komplementär ausgebildet sind.

8. Stützeinrichtung nach einem der vorhergehenden Ansprüche, **dadurch gekennzeichnet, dass** das erste Aufstellelement (44) und/oder das zweite Aufstellelement (46) derart ausgebildet und eingerichtet ist bzw. sind, dass sich der zum Verschwenken des zweiten Stützteiles wirksame Hebelarm von einer unverstellten Ausgangslage in Richtung auf eine Endlage der Verstellbewegung des zweiten Stützteiles hin verlängert.

## Claims

1. Support device (2), adjustable by an electric motor, for the padding or seating of reclining furniture, in particular the mattress of a bed, comprising:
a base body (4) including support parts (6 - 14) on which the padding is supported during use of the support device (2), the support parts (6 - 14) comprising at least one stationary first support part (6) and a second support part (10) which is pivotably adjustable relative to the first support part about a pivot axis, and
a drive device (16) for adjusting the second support part (10) relative to the first support part (6),
the second support part (10) being designed and configured so that the pivot axis is supported so as to be translationally movable in the longitudinal direction of the support device (2) and
the second support part being in drive connection with the drive device (16) such that during the pivoting adjustment the second support part (10) at least in phases simultaneously performs a translational movement away from the first support part (6), during the translational movement the second support part (10) or a component connected to the second support part runs onto a first positioning element (44) and thereby pivots and
a slide (40) is provided, on which the pivot axis is supported, and which is translationally movable by the drive device (16),
**characterised in that**
the second support part (10) is in drive connection with the drive device (16) in such a way that during the whole adjustment movement between a non-adjusted starting position, in which the second support part (10) together with the first support part (6) spans a horizontal or approximately horizontal support plane, and an end position of the adjustment movement, the second support part (10) simultaneously performs both a pivoting movement and also a translational movement.

2. Support device according to claim 1, **characterised in that** the drive device (16) has a linear drive for the translational movement of the second support part (10).

3. Support device according to claim 1 or claim 2, **characterised in that** the slide (40) is mounted to be translationally movable on a longitudinal guide.

4. Support device according to any of the preceding claims, **characterised In that** the first positioning element (44) is situated laterally next to a translational movement path of the second support part (10), and **in that** a second positioning element (46) is connected to the second support part (10), wherein the first positioning element (44) is arranged in the movement path of the second positioning element (46) in such a way that during the translational movement of the second support part (10) the second positioning element (46) cooperates with the first positioning element (44) in order to pivot the second support part (10).

5. Support device according to any of the preceding claims, **characterised in that** the positioning element or positioning elements (44, 46) cause the pivoting of the second support part (10) according to the principle of operation of an inclined plane or cam mechanism.

6. Support device according to claim 5, **characterised in that** at least one positioning element (44, 46) is designed on its outer periphery as a cam body in such a way that the first positioning element (44) and the second positioning element (46) cooperate with one another in the manner of a cam mechanism.

7. Support device according to claim 5 or 6, **characterised in that** the first positioning element (44) and the second positioning element (46) are designed in cross-section at least in sections to be complementary or approximately complementary to one another.

8. Support device according to any of the preceding claims, **characterised in that** the first positioning element (44) and/or the second positioning element (46) is/are designed and configured such that the lever arm which causes the pivoting of the second support part lengthens from a non-adjusted starting position towards an end position of the adjustment movement of the second support part.

## Revendications

1. Dispositif d'appui réglable à l'aide d'un moteur électrique (2) pour un rembourrage d'un siège et/ou d'un lit, plus particulièrement un matelas d'un lit,
avec un corps de base (4), qui comprend des parties d'appui (6 - 14), sur lesquelles le rembourrage s'appuie lors de l'utilisation du dispositif d'appui (2), les parties d'appui (6 - 14) comprenant au moins une première partie d'appui fixe (6) et une deuxième partie d'appui (10) réglable par pivotement par rapport à la première partie d'appui autour d'un axe de pivotement et
avec un dispositif d'entraînement (16) pour le réglage de la deuxième partie d'appui (10) par rapport à la première partie d'appui (6),
la deuxième partie d'appui (10) étant conçue et configurée de façon à ce que l'axe de pivotement est logé de manière coulissante en translation dans la direction longitudinale du dispositif d'appui (2) et
la deuxième partie d'appui étant en liaison d'entraînement avec le dispositif d'entraînement (16) de façon à ce que la deuxième partie d'appui (10) effectue simultanément, pendant le réglage par pivotement, au moins par phases, un mouvement de translation loin de la première partie d'appui (6),
la deuxième partie d'appui (10) ou un composant relié à celle-ci se déplaçant, pendant le mouvement de translation, vers un premier élément de redressement (44) et le pivote ainsi et
un chariot (40) étant prévu, au niveau duquel l'axe de pivotement est logé et qui peut être déplacé en translation par le dispositif d'entraînement (16),
**caractérisé en ce que**
la deuxième partie d'appui (10) est en liaison d'entraînement avec le dispositif d'entraînement (16) de façon à ce que la deuxième partie d'appui (10) effectue, pendant tout le mouvement de réglage entre une position de départ non réglée, dans laquelle la deuxième partie d'appui (10) forme, avec la première partie d'appui (6), un plan d'appui horizontal ou approximativement horizontal et une position finale du mouvement de réglage, simultanément un mouvement de pivotement et un mouvement de translation.

2. Dispositif d'appui selon la revendication 1, **caractérisé en ce que** le dispositif d'entraînement (16) comprend, pour le mouvement en translation de la deuxième partie d'appui (10), un entraînement linéaire.

3. Dispositif d'appui selon la revendication 1 ou 2, **caractérisé en ce que** le chariot (40) est logé de manière mobile en translation au niveau d'un guidage longitudinal.

4. Dispositif d'appui selon l'une des revendications précédentes, **caractérisé en ce que** le premier élément de redressement (44) est disposé latéralement à côté d'une piste de mouvement de translation de la deuxième partie d'appui (10) et **en ce que**, avec la deuxième partie d'appui (10), un deuxième élément de redressement (46) est relié, le premier élément de redressement (44) étant disposé dans la piste de mouvement du deuxième élément de redressement (46) de façon à ce que le deuxième élément de redressement (46) interagit, pendant le mouvement en translation de la deuxième partie d'appui (10), avec le premier élément de redressement (44) pour le pivotement de la deuxième partie d'appui (10).

5. Dispositif d'appui selon l'une des revendications précédentes, **caractérisé en ce que** l'élément de redressement ou les éléments de redressement (44, 46) provoquent le pivotement de la deuxième partie d'appui (10) selon le principe d'action d'un plan incliné ou d'une transmission à cames.

6. Dispositif d'appui selon la revendication 5, **caractérisé en ce qu'**au moins un élément de redressement (44, 46) est conçu, au niveau de sa circonférence externe, comme un corps de came, de façon à ce que le premier élément de redressement (44) et le deuxième élément de redressement (46) interagissent à la manière d'une transmission à cames.

7. Dispositif d'appui selon la revendication 5 ou 6, **caractérisé en ce que** le premier élément de redressement (44) et le deuxième élément de redressement (46) présentent des sections transversales complémentaires ou approximativement complémentaires entre elles au moins à certains endroits.

8. Dispositif d'appui selon l'une des revendications précédentes, **caractérisé en ce que** le premier élément de redressement (44) et/ou le deuxième élément de redressement (46) est ou sont conçu(s) et configuré(s) de façon à allonger le bras de levier agissant pour le pivotement de la deuxième partie d'appui d'une position de départ non réglée en direction d'une position finale du mouvement de réglage de la deuxième partie d'appui.
